# EUROPEAN PATENT SPECIFICATION

(11) **EP 3 382 595 B1**
(45) Date of publication and mention of the grant of the patent: **25.08.2021**
(21) Application number: 18165415.3
(22) Date of filing: 03.04.2018
(51) Int. Cl.: G06F 21/85, G06F 1/26

(54) **EMARKER-EQUIPPED CABLE AND POWER MANAGEMENT METHOD THEREOF**
EMARKER UND ASSOZIERTES KABEL UND VERFAHREN
EMARQUEUR ET CÂBLE ASSOCIÉ ET PROCÉDÉ

(30) Priority: 31.03.2017 US 201762479342 P; 27.10.2017 TW 106137054
(43) Date of publication of application: 03.10.2018
(73) Proprietor: VIA LABS, INC., New Taipei City 231 (TW)
(72) Inventor: SU, Feng-Kuan, 231 New Taipei City Hsin-Tien (TW); LIN, Yu-Lung, 231 New Taipei City Hsin-Tien (TW); CHEN, Yi-Te, 231 New Taipei City Hsin-Tien (TW)
(74) Representative: Reichert & Lindner Partnerschaft Patentanwälte

(56) References cited:
- EP-A1- 2 930 588
- EP-A1- 3 148 031
- CN-A- 106 055 507
- US-A1- 2015 346 790
- US-A1- 2016 147 692
- US-A1- 2017 038 810
- US-A1- 2018 123 594
- Anonymous: "Designing a Type-C Electronically Marked Cable - Part 1", , 28 June 2016 (2016-06-28), XP055470940, Retrieved from the Internet: URL:https://www.pddnet.com/article/2016/06 /designing-type-c-electronically-marked-ca ble-part-1 [retrieved on 2018-04-26]
- Connector Innovation ET AL: "USB-C Threats and Protection", , 15 March 2017 (2017-03-15), page 1, XP055478830, Retrieved from the Internet: URL:http://www.littelfuse.com/about-us/eve nts/~/media/e90e5a224f75424bb42c22e8827c5a d5.ashx

## Description

### FIELD OF THE INVENTION

The present invention relates to an eMarker device, and more particularly, to a USB type-C eMarker device. The present invention also relates to a cable equipped with an eMarker device and a power management method for use with an eMarker device for active and self-initialized protection of abnormal events such as over-current, over-voltage and/or over-temperature protection events.

### BACKGROUND OF THE INVENTION

USB (universal serial bus) type-C is an emerging and versatile interface standard; it not only supports typical USB data interconnect, but also includes various power supply options for supplying power from an electronic device to another electronic device, such as: supplying power from a portable power bank to a mobile phone, or supplying power from a host computer to a peripheral monitor, etc. EP 2930588 A1, EP 3148031 A1 and CN 106055507 A describe power delivery or data transmission between power source and specific kind of power sink. The power supply options of USB type-C may include: 5Vx0.5A of USB 2.0 (V and A respectively representing volt and ampere), 5Vx0.9A of USB 3.1, 5Vx1.5A of USB BC 1.2 (for USB type-A connector, with BC being battery charging), 5Vx1.5A (for USB type-C connector), 5Vx3.0A (for USB type-C connector), and a configurable supply of USB PD (power delivery) up to 20Vx5A (for USB type-C connector). The specification of type-C electronically marked cable may refer to article of "Designing a Type-C Electronically Marked Cable-Par 1". US 2015346790 A1 also gives several USB charger cables.

To adapt the various power supply options, a USB type-C cable may be equipped with a CC (configuration channel) wire and an eMarker; when the cable connects a port which supports USB PD and is capable of operating as a source for providing power, the port may send a request message over the CC wire; the eMarker in the cable may receive the request message, and then respond a data message over the CC wire, such that the port may obtain information related to the cable, such as rated and/or tolerable voltage, current and/or power of the cable.

Because there are significant differences among powers of the different power supply options, supply safety becomes a main concern. For example, "USB-C Threats and Protection" from Connector Innovation Forum proposes a PTC (positive temperature coefficient) device to provide over-temperature protection for USB plug/receptacle. For supply safety, when a port which operates as a (power) source connects another port which operates as a (power) sink via a USB type-C cable, if both the two port support USB PD, the two ports may interchange alert messages of over-voltage and over-current. In other words, for the aforementioned power safety mechanism to work, a key requirement is that both the source port and the sink port must support USB PD. However, support of USB PD is not mandatory for a USB type-C port; if any one of the source port and the sink port does not support USB PD, such power safety mechanism will fail to work. Other prior art examples are: US 2018/123594 and US 2017/038810.

### SUMMARY OF THE INVENTION

An object of the present invention is to provide an eMarker device according to claim 1 for overcoming the defects of conventional power safety mechanisms.

The present invention also provides a cable according to claim 12 including the eMarker device, and a power management method of the cable according to claim 13. Preferred embodiments are defined in dependent claims. The invention is set out in the appended set of claims. The embodiments and/or examples of the following description which are not covered by the appended claims are considered as not being part of the present invention.

### BRIEF DESCRIPTION OF THE DRAWINGS

The above contents of the present invention will become more readily apparent to those ordinarily skilled in the art after reviewing the following detailed description and accompanying drawings, in which:
FIG. 1 is a schematic circuit block diagram illustrating a cable including an eMarker device according to an example being not covered by the appended claims and therefore is considered as not being part of the present invention.
FIG. 2 is a flowchart schematically illustrating a power manage method according to an embodiment being not covered by the appended claims and therefore is considered as not being part of the present invention.
FIGS. 3A-3C are schemes illustrating operations of the cable shown in FIG. 1;
FIG. 4 is a schematic circuit block diagram illustrating a cable including an eMarker device according to an example being not covered by the appended claims and therefore is considered as not being part of the present invention.
FIG. 5 is a schematic circuit block diagram illustrating a cable including an eMarker device according to an embodiment being not covered by the appended claims and therefore is considered as not being part of the present invention.
FIG. 6 is a schematic circuit block diagram illustrating a cable including an eMarker device according to an embodiment of the present invention;
FIG. 7 is a schematic circuit block diagram illustrating a cable including an eMarker device according to still another embodiment of the present invention;

### DETAILED DESCRIPTION OF THE PREFERRED EMBODIMENT

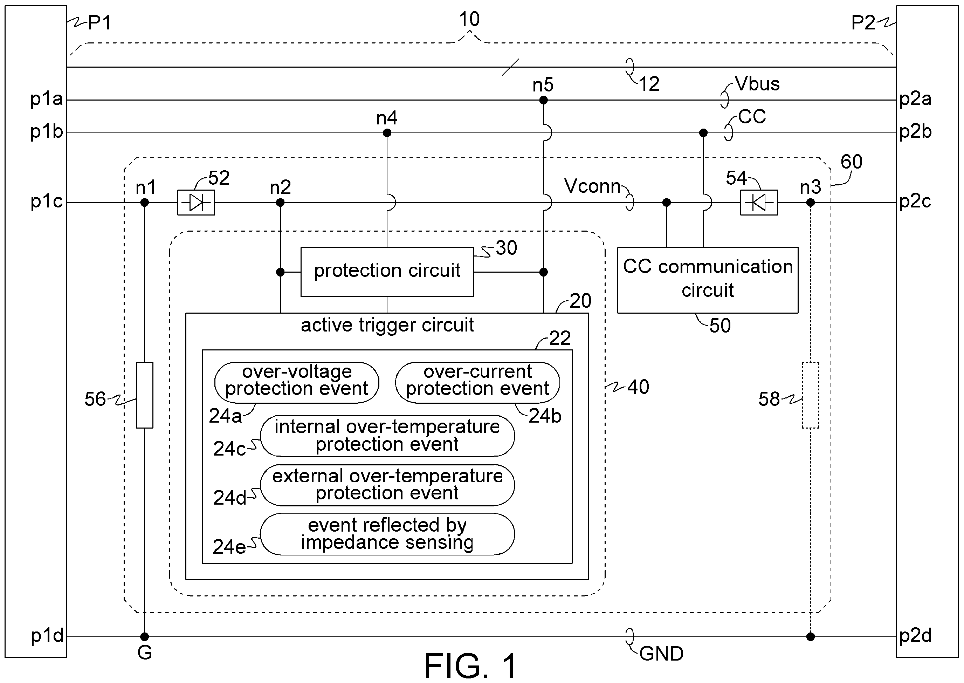

Please refer to FIG. 1, which schematically illustrating a cable 10, which is, for example, a USB type-C cable for connecting two ports P1 and P2. The two ports P1 and P2 may respectively belong to two different electronic devices (not shown). The cable 10 includes an eMarker 60, a CC wire, at least a Vbus wire and at least a GND wire, wherein the Vbus wire may be a bus power wire, the CC wire may be a configuration channel wire, and the GND wire may be a ground wire.

The cable 10 includes a plurality of data wires 12 for supporting USB data interconnect, e.g., a pair of differential signal wires for supporting high-speed interconnect of USB 2.0, several sideband signal wires and/or multiple differential signal wires for supporting SuperSpeed interconnect of USB 3.1.

In this embodiment, the port P1 includes pins p1a to p1d; the pin p1a may be a Vbus (bus power) pin defined in USB type-C specification, the pin p1d may be a GND (ground) pin defined in USB type-C specification; the pin p1b may be one of CC1 and CC2 pins defined in USB type-C specification, and the pin p1c may be the other one of the CC1 and CC2 pins. Similarly, the port P2 may include pins p2a to p2d; the pin p2a may be a Vbus pin defined in USB type-C specification, the pin p2d may be a GND pin defined in USB type-C specification; the pin p2b may be one of CC1 and CC2 pins defined in USB type-C specification, and the pin p2c may be the other one of the CC1 and CC2 pins.

When the ports P1 and P2 mutually connect via the cable 10, the pin p1a of the port P1 may be coupled to the pin p2a of the port P2 via the Vbus wire, the pin p1b of the port P1 may be coupled to the pin p2b of the port P2 via the CC wire, and the pin p1d of the port P1 may be coupled to the pin p2d of the port P2 via the GND wire.

In addition, the cable 10 further includes isolation elements 52 and 54 arranged on a Vconn wire, wherein the isolation element 52 may be coupled between nodes n1 and n2, and the isolation element 54 may be coupled between nodes n2 and n3. When the ports P1 and P2 connect via the cable 10, the pin pic of the port P1 may be coupled to the node n1, the pin p2c of the port P2 may be coupled to the node n3, and the isolation elements 52 and 54 may prevent end-to-end traverse between the pins p1c and p2c along the Vconn wire.

The cable 10 may further include two impedances 56 and 58. The impedance 56 is coupled between the node n1 and a node G of the GND wire, the impedance 58 is coupled between the node n3 and the node G. When the cable 10 connects the port P1, the cable 10 may present a terminal resistor, e.g., the resistor Ra defined in USB type-C specification, between the nodes n1 and G by the impedance 56. Similarly, when the cable 10 connects the port P2, the cable 10 may present a terminal resistor, e.g., the resistor Ra defined in USB type-C specification, between the nodes n3 and G by the impedance 58. In an embodiment, the impedances 56 and 58 for presenting the resistor Ra may be implemented by one single impedance; e.g., the impedance 58 may be omitted.

The eMarker 60 of the cable 10 may include a CC communication circuit 50 coupled to the CC wire at a node n4, and further include an active protection module 40 to implement the invention. In an embodiment, the CC communication circuit 50, the active protection module 40, the isolation elements 52 and 54, and the impedances 56 and 58 may be packaged in a same eMarker chip. In another embodiment, the CC communication circuit 50 and the active protection module 40 may be packaged in a same eMarker chip, while the isolation elements 52 and 54 and/or the impedances 56 and 58 may be external elements.

When the ports P1 and P2 connect via the cable 10, if one of the two ports P1 and P2 operates as a (power) source and the other operates as a (power) sink, the source port may supply power to the sink port. For convenience of discussion, it is assumed that the port P1 is the source port and the port P2 is the sink port.

As previously explained, the supply safety mechanism of USB PD works only if both the ports P1 and P2 support USB PD. If either one of the two ports does not support USB PD, such supply safety mechanism will not work. In addition, the supply safety mechanism of USB PD fails to consider protecting the cable and eMarker. Besides, under USB PD specification, an eMarker is only designed to passively respond messages after receiving request messages from a port without actively initiating any supply safety mechanism.

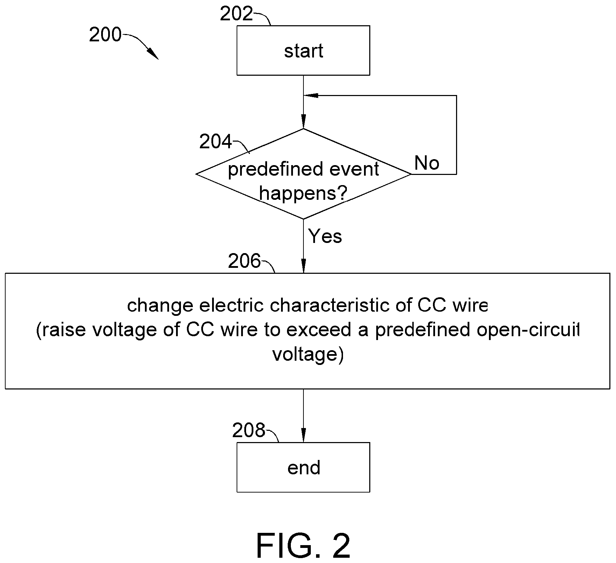

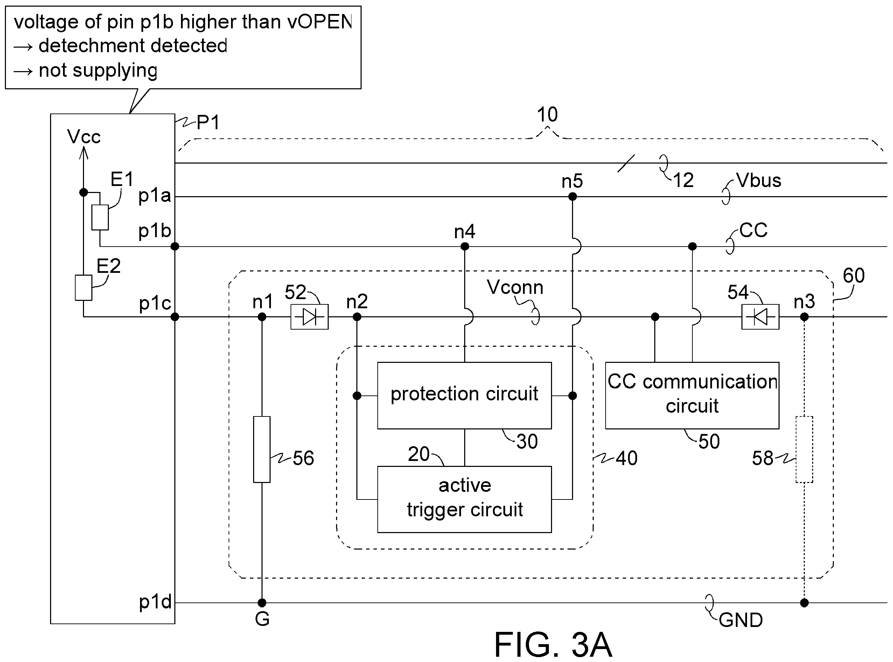

To overcome aforementioned disadvantages of USB PD (and USB type-C) specification, the eMarker 60 of the invention is equipped with the active protection module 40, which can actively initiate a supply safety mechanism of the invention. The active protection module 40 includes an active trigger circuit 20 and a protection circuit 30. The CC communication circuit 50, the active trigger circuit 20 and the protection circuit 30 may also be coupled to the Vconn and Vbus wires, so as to drain required operations power from the Vconn or Vbus wire. The protection circuit 30 may further be coupled to the active trigger circuit 20, and coupled to the CC wire at the node n4. Along with FIG. 1, please refer to FIG. 2 and FIGS. 3A to 3C. FIG. 2 illustrates a flowchart 200 according to an embodiment of the invention. The eMarker 60 in the cable 10 executes the flowchart 200 to actively initiate the supply safety mechanism of the invention. FIGS. 3A to 3C illustrate operations of the cable 10 and the ports P1 and P2. It is understood that FIGS. 3A to 3C is only an example of the invention, and any other embodiment allowing the CC communication circuit 50 and the active protection module 40 of the eMarker 60 to drain power and start operating may implement the supply safety mechanism of the invention. In an embodiment, a required operation power of the eMarker 60 is provided via the Vconn wire or the Vbus wire. In another embodiment, the operation power of the eMarker 60 is provided by an external battery or charger (not shown). In the following embodiment, an example with the eMarker 60 powered via the Vconn wire is discussed.

As shown in FIG. 3A, in the port P1 which operates as a source, the pins p1b and pic is coupled to a high voltage Vcc (e.g., a 3.3V or 5V dc voltage) respectively via two internal elements E1 and E2. Each of the internal elements E1 and E2 is a resistor (e.g., the resistor Rp defined in USB type-C specification) or a current source (e.g., the current source Ip defined in USB type-C specification). The port P1 monitors voltages of the pins p1b and pic to detect if there is another port attached to the port P1. In FIG. 3A, the port P1 already connects the cable 10, but there is no other port connecting the port P1 via the cable 10. Because the node n1 coupled to the pin pic is also coupled to the GND wire and the ground pin p1d via the impedance 56, the voltage of the pin p1c will be pulled down. On the other hand, the CC wire coupled to the pin p1b does not have any conductive path to the GND wire, so the voltage of the pin p1b is not pulled down, and will therefore be higher than a predefined open-circuit voltage (e.g., the voltage vOPEN defined in USB type-C specification). Because the voltage of the pin p1b is higher than the predefined open-circuit voltage, the port P1 may determine that there is no other port attached to the port P1. If there is no attachment detected, the port P1 will not supply power (voltage and current) to the Vbus wire.

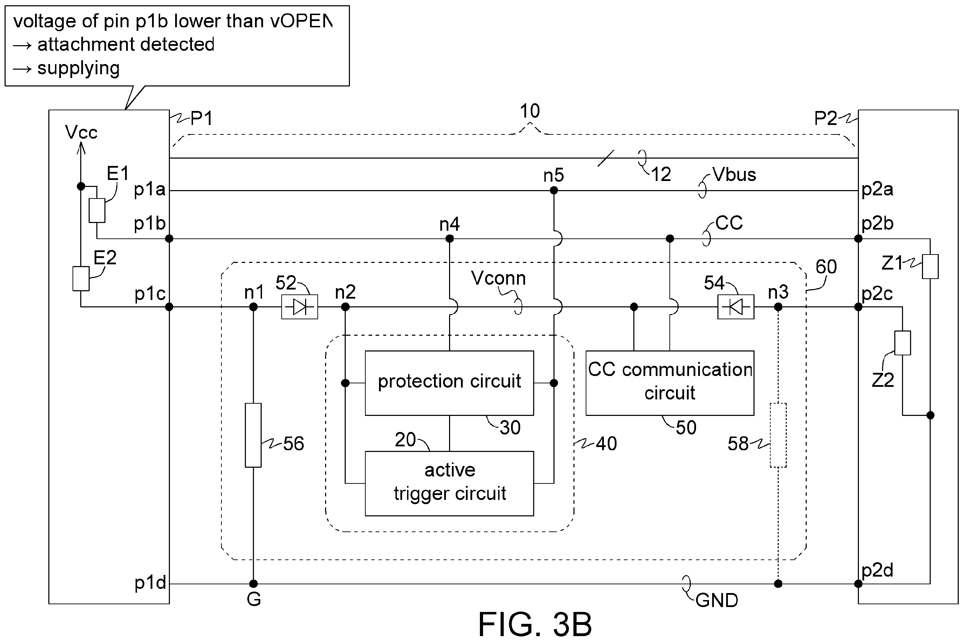

In FIG. 3B, the sink port P2 connects the port P1 via the cable 10. In the port P2, the pins p2b and p2c are coupled to the ground pin p2d respectively via two internal impedances Z1 and Z2, wherein each of the internal impedances Z1 and Z2 may be a resistor (e.g., the resistor Rd defined in USB type-C specification). Hence, when the port P2 connects the port P1 via the cable 10, the CC wire, which is coupled to the pin plb, is coupled to the grounding GND wire, which is coupled to the pin p2d, via the impedance Z1. A voltage of the pin p1b is therefore pulled down to be lower than the aforementioned predefined open-circuit voltage. When the port P1 detects that the voltage of the pin p1b is lower than the predefined open-circuit voltage, the port P1 determines that there is another port P2 attached to the port P1. Then, the port P1 supplies power to the port P2 via the Vbus wire in the cable 10. The port P1 or P2 supplies power to the Vconn wire via the node n1 or n3, such that the CC communication circuit 50 and the active protection module 40 in the eMarker 60 can drain power from the Vconn wire to start operating, and the active protection module 40 executes the flowchart 200 shown in FIG. 2. Main steps of the flowchart 200 will be described as follows.

Step 202: as shown in FIG. 3B, when the port P1 supplies power to the port P2 via the cable 10, the eMarker 60 starts the flowchart 200, and the active protection module 40 proceeds to Step 204 to implement the supply safety mechanism of the invention. In addition, the CC communication circuit 50 performs bi-phase mark coded communication defined in USB PD over the CC wire, including: receiving SOP' (with SOP denoting start of packet) packets sent by the port P1 or P2, and sending SOP' packets in return. However, it is emphasized that the packets transmissions between the ports P1 and P2 are not mandatory nor necessary for the supply safety mechanism of the invention to start and proceed. Whether the packets transmissions between the ports P1 and P2 occur or not, the eMarker 60 may independently implement the supply safety mechanism of the invention, as long as the eMarker 60 is supplied with power.

Step 204: if a predefined event 22 (FIG. 1) happens, then the active trigger circuit 20 in the active protection module 40 triggers the protection circuit 30 to proceed to Step 206. Otherwise, iterate to Step 204. In an embodiment, the predefined event 22 may reflect supply abnormal events of the Vbus wire. For example, as shown in FIG. 1, the predefined event 22 may include an over-voltage protection event 24a, an over-current protection event 24b, an internal over-temperature protection event 24c, an external over-temperature protection event 24d, and an event 24e reflected by impedance sensing, etc. If any of the events occurs, the active protection module 40 proceeds to Step 206.

To detect abnormal events, the active trigger circuit 20 is coupled to the Vbus wire at the node n5, so as to determine whether the predefined event 22 happens according to one or more supply characteristics (e.g., current, voltage and/or temperature) of the Vbus wire. For example, if voltage of the Vbus wire is too high (higher than a safety voltage value), the active trigger circuit 20 determines that the over-voltage protection event 24a has happened. If a current of the Vbus wire is too large (larger than a safety current value), the active trigger circuit 20 determines that the over-current protection event 24b has happened. In addition, the eMarker 60 may sense temperature according to changes of its semiconductor characteristics. For example, the eMarker 60 has an internal temperature sensor to sense chip internal temperature. If the temperature is too high (higher than an internal safety temperature), the active trigger circuit 20 determines that the internal over-temperature event 24c has happened. In an embodiment, the eMarker 60 may connect to an external temperature sensor (e.g., a thermistor, not shown) to sense temperature. If the temperature is too high (higher than a safety temperature), the active trigger circuit 20 determines that the external over-temperature event 24d has happened. In an embodiment, the eMarker 60 may sense a supply characteristic of the Vbus wire by an impedance (not shown) coupled to the Vbus wire. For example, if a cross voltage of the impedance is too high, it may reflect that a current of the Vbus wire is too large, and the active trigger circuit 20 determines that the event 24e reflected by impedance sensing has occurred.

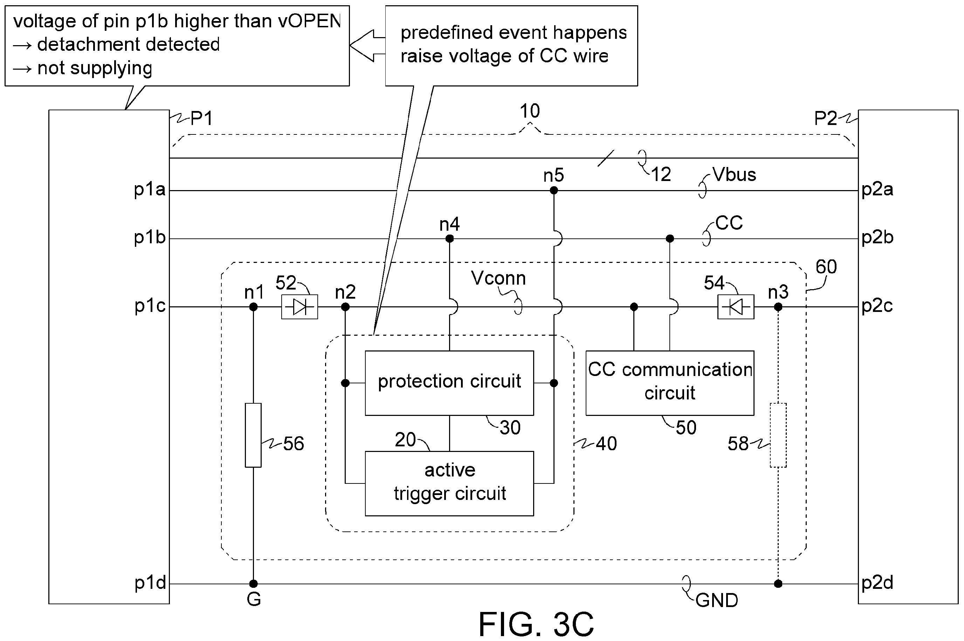

Step 206 (FIG. 2): as shown in FIG. 3C, the active trigger circuit 20 triggers the protection circuit 30 when the predefined event 22 happens. The protection circuit 30 changes an electric characteristic of the CC wire when triggered, such that the source port P1 detects that the sink port P2 has detached, even though the ports P1 and P2 actually still remains connected via the cable 10. In an embodiment, the protection circuit 30 raises the voltage of the CC wire to exceed the predefined open-circuit voltage mentioned in FIGS. 3A and 3B (e.g., the voltage vOPEN defined in USB type-C specification). Since the voltage vOPEN defined in USB type-C specification is 1.65V or 2.75V, in an embodiment of Step 206, when the predefined event 22 happens, the protection circuit 30 causes the voltage of the CC wire to be higher than the maximum one of multiple predefined open-circuit voltages, e.g., higher than 2.75V. In an embodiment, the protection circuit 30 may couple the CC wire to the Vconn wire or the Vbus wire when the active trigger circuit 20 triggers, and utilize the voltage of the Vconn wire or the Vbus wire to cause the voltage of the CC wire to be higher than the predefined open-circuit voltage, because the voltage supplied to the Vconn wire or the Vbus wire will be higher than the predefined open-circuit voltage.

As explained by FIG. 3A, when the port P1 detects that the voltage of the pin p1b is higher than the predefined open-circuit voltage, the port P1 will determine that there is no other port attached to the port P1, and the port P1 will not supply power to the Vbus wire due to absence of attachment. Therefore, in FIG. 3C, when the predefined event happens and the protection circuit 30 raises the voltage of the CC wire to exceed the predefined open-circuit voltage, the port P1 will also detect that the voltage of the pin p1b is higher than the predefined open-circuit voltage, and determine that the port P2 has been detached, even though the port P2 remains connected to the port P1 via the cable 10.

Step 208: when the source port P1 detects that the sink port P2 has been detached, the port P1 will stop supplying power to the Vbus wire. Accordingly, the supply abnormal event stops, and the supply safety mechanism of the invention can be achieved while the flowchart 200 ends. When the port P1 stops supplying power to the Vbus wire, power supplied to the Vconn wire also stops, and the eMarker 60 stop operating. Afterwards, since the port P2 remains connected to the port P1 via the cable 10, the port P1 redetects that the port P2 is attached, and restarts supplying power to the Vbus wire. The flowchart 200 may also start again. In an embodiment, the cable 10 may be unplugged and plugged again between the ports P1 and P2, so the flowchart 200 is executed again.

The above-described eMarker 60 is generally integrated into one of the opposite terminals of the cable 10, e.g. disposed in the shells of a connector (not shown) coupled to the ports P1 or P2. In consideration of the cost-down issue, the eMarker 60 is equipped in only one of the connector shells of the cable 10, and thus only the supply characteristic, e.g. temperature, of one of the ports and the corresponding connector shell can be monitored. In other words, if the oppositely disposed port and/or its corresponding connector shell suffer from an overtemperature, it would be unable to be timely noticed as the above-described internal temperature sensor cannot detect the temperature variation at such a distant end. If the power cannot be interrupted upon occurrence of overtemperature, damage might happen. Therefore, it is desirable to equip the eMarker 60 in each of the connector shells of the cable 10 to timely and accurately detect the supply characteristic of the cable 10.

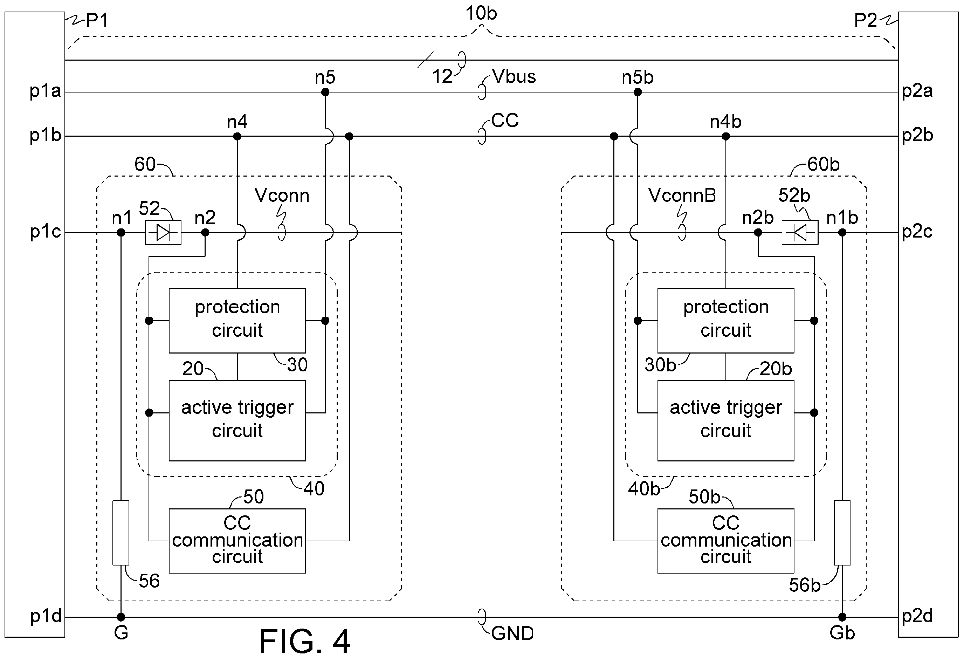

Please refer to FIG. 4 illustrating a cable 10b and two pieces of eMarkers 60 and 60b according to an example of the invention. The cable 10b may be a USB type-C cable, for connecting two ports P1 and P2. The ports P1 and P2 respectively belong to different electronic devices (not shown). The cable 10b includes the eMarkers 60 and 60b, a CC wire, at least a Vbus wire and at least a GND wire. The Vbus wire is a bus power wire. The CC wire is a configuration channel wire, and the GND wire is a ground wire. The cable 10b may also include multiple data wires 12 for supporting USB data interconnect, e.g., a pair of differential signal wires for supporting high-speed interconnect of USB 2.0, several sideband signal wires and/or multiple differential signal wires for supporting SuperSpeed interconnect of USB 3.1.

The port P1 may include pins p1a to p1d, wherein the pin p1a may be a Vbus pin defined in USB type-C specification, the pin p1d may be a GND pin defined in USB type-C specification, the pin p1b may be one of CC1 and CC2 pins defined in USB-type-C specification, and the pin pic may be the other one of the CC1 and CC2 pins. Similarly, the port P2 may include pins p2a to p2d, wherein the pin p2a may be a Vbus pin defined in USB type-C specification, the pin p2d may be a GND pin defined in USB type-C specification, the pin p2b may be one of CC1 and CC2 pins defined in USB-type-C specification, and the pin p2c may be the other one of the CC1 and CC2 pins.

When the ports P1 and P2 connect via the cable 10b, the pin p1a of the port P1 is coupled to the pin p2a of the port P2 via the Vbus wire, the pin p1b of the port P1 is coupled to the pin p2b of the port P2 via the CC wire, and the pin p1d of the port P1 is coupled to the pin p2d of the port P2 via the GND wire.

In addition, the cable 10b may further include isolation elements 52 and 52b. The isolation element 52 is arranged on a Vconn wire, and coupled between nodes n1 and n2. The isolation element 52b is arranged on a VconnB wire, and coupled between nodes n1b and n2b. When the ports P1 and P2 connect via the cable 10b, the pin p1c of the port P1 are coupled to the node n1, and the pin p2c of the port P2 are coupled to the node n1b.

The cable 10b may further include two impedances 56 and 56b. The impedance 56 is coupled between the node n1 and a node G of the GND wire, and the impedance 56b is coupled between the node n1b and a node Gb of the GND wire. When the cable 10b connects the port P1, the cable 10b presents a terminal resistor, e.g., the resistor Ra defined in USB type-C specification, between the nodes n1 and G by the impedance 56. Similarly, when the cable 10b connects the port P2, the cable 10b presents a terminal resistor, e.g., the resistor Ra defined in USB type-C specification, between the nodes n1b and G by the impedance 56b.

The eMarker 60 of the cable 10b may include a CC communication circuit 50 coupled to the CC wire at a node n4, and further include an active protection module 40 to implement the invention. Similarly, the eMarker 60b may include a CC communication circuit 50b coupled to the CC wire at a node n4b, and further include an active protection module 40b to implement the invention. The active protection module 40 may include an active trigger circuit 20 and a protection circuit 30, while the active protection module 40b may include an active trigger circuit 20b and a protection circuit 30b. The CC communication circuit 50, the active trigger circuit 20 and the protection circuit 30 may be coupled to the Vconn and Vbus wires, so as to drain required operation power from the Vconn or Vbus wire. The protection circuit 30 may also be coupled to the active trigger circuit 20, and coupled to the CC wire at the node n4. The protection circuit 30b may also be coupled to the active trigger circuit 20b, and coupled to the CC wire at the node n4b. The CC communication circuit 50b, the active trigger circuit 20b and the protection circuit 30b may be coupled to the VconnB and Vbus wires, so as to drain required operation power from the VconnB or Vbus wire. FIG. 4 merely illustrates an example of the invention, while any arrangement which allows the CC communication circuits 50 and 50b and the active protection modules 40 and 40b to drain power and start operation may be utilized to implement the supply safety mechanism of the invention. In an embodiment, required operation power of the eMarkers 60 and 60b may be provided via the Vconn wire or the Vbus wire. In another embodiment, operation power of the eMarkers 60 and 60b may be provided by an external battery or charger (not shown). In the following embodiment, an example with the eMarkers 60 and 60b powered respectively via the Vconn wire and the VconnB wire is discussed.

In an embodiment implemented according to FIGS. 4-7 and associated descriptions of USB type-C specification release 1.2, at least one of the active protection modules 40 and 40b may execute steps 204 and 206 shown in FIG. 2. When the ports P1 and P2 mutually connect via the cable 10b, one of the ports P1 and P2 supplies power to the other via the Vbus wire of the cable 10b, and only one of the eMarkers 60 and 60b drains power, such that the corresponding one of the active protection modules 40 and 40b executes steps 204 and 206 shown in FIG. 2. The active trigger circuit 20 (or

20b) may be coupled to the Vbus wire at a node n5 (or n5b) to determine whether a supply abnormal event happens according to supply characteristic (e.g., current, voltage, temperature, etc.) of the Vbus wire, and trigger the protection circuit 30 (or 30b) when the abnormal event happens (step 204), such that the protection circuit 30 (or 30b) raises voltage of the CC wire to exceed the predefined open-circuit voltage (step 206), and causes the source port to detect a detachment when the two ports still remain physically connected, and therefore stop supplying power to the Vbus wire. As a result, the abnormal event can be stopped. The supply safety mechanism of the invention can be effectively implemented even if there is only one of the active protection modules 40 and 40b to raise the voltage of the CC wire to exceed the predefined open-circuit voltage when an abnormal event occurs. However, as mentioned above, in the circuitry shown in FIG, 4, only one of the eMarker 60 and eMarker 60b, e.g. the one which connects to the corresponding port first, can drain power at a same time point, and it is not possible to activate the eMarker 60 and eMarker 60b simultaneously. It is inherent that only one of the terminals of the cable 10 can be monitored to realize the supply characteristics, e.g. temperature, at the corresponding port and connector shell, and the abnormal events, e.g. overtemperature, at the other terminal cannot be timely noted by the distant internal temperature sensor. As a result, preventive power interruption cannot be timely executed and damage might thus occur.

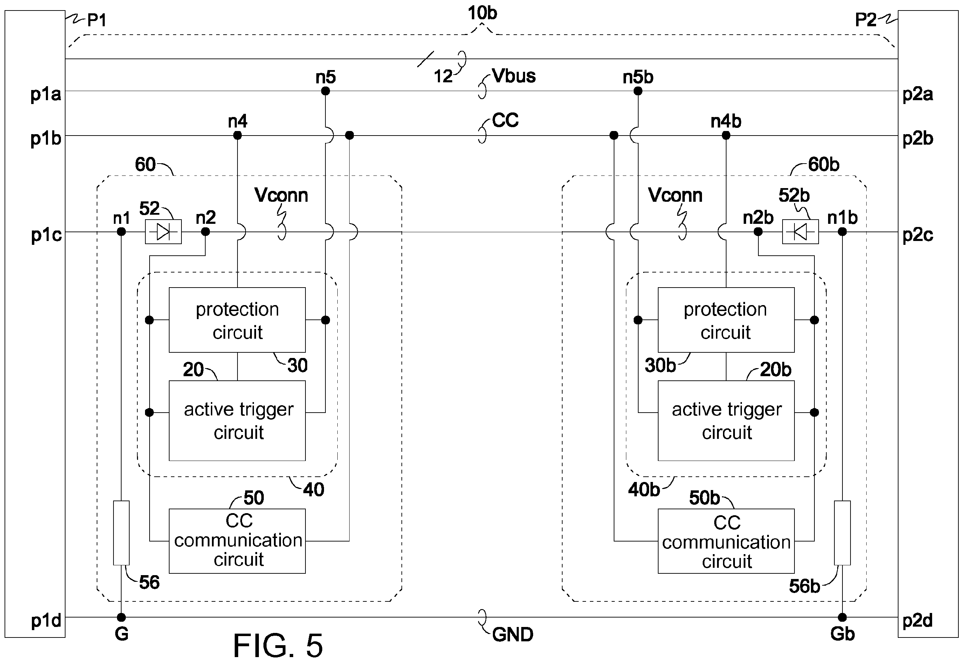

For improvement, a new invention is developed. An embodiment of the invention will be described hereinafter with reference to FIG. 5. This embodiment may be implemented according to FIGS. 5-7 and associated description of USB type-C specification release 1.2, both the active protection modules 40 and 40b may execute steps 204 and 206 shown in FIG. 2. The embodiment shown in FIG. 5 differs from the embodiment shown in FIG. 4 in that the pin p1c of the port P1 and the pin p2c of the port P2 are electrically connected to each other via the same Vconn wire. As such, no matter whether power is supplied through the pin p1c of the port P1 or the pin p2c of the port P2, both the eMarker 60 and eMarker 60b can drain power.

According to the specification, both the eMarker 60 and eMarker 60b execute BMC (bi-phase mark coded) communication via the common CC wire with different SOPs (start of packet), e.g. SOP' and SOP" to indicate different devices. The CC communication circuit 50 receives an SOP' from the port P1 or the port P2 through the CC wire, and sends a SOP' in response. On the other hand, the CC communication circuit 50b receives an SOP" from the port P1 or the port P2 through the CC wire, and sends a SOP" in response. The architecture supports a bi-directional current flow between the port P1 and the port P2, so it is required that both the CC communication circuit 50 and the CC communication circuit 50b correctly respond to the SOP' and the SOP", respectively. The circuitries of the eMarker 60 and eMarker 60b might thus be a little complicated.

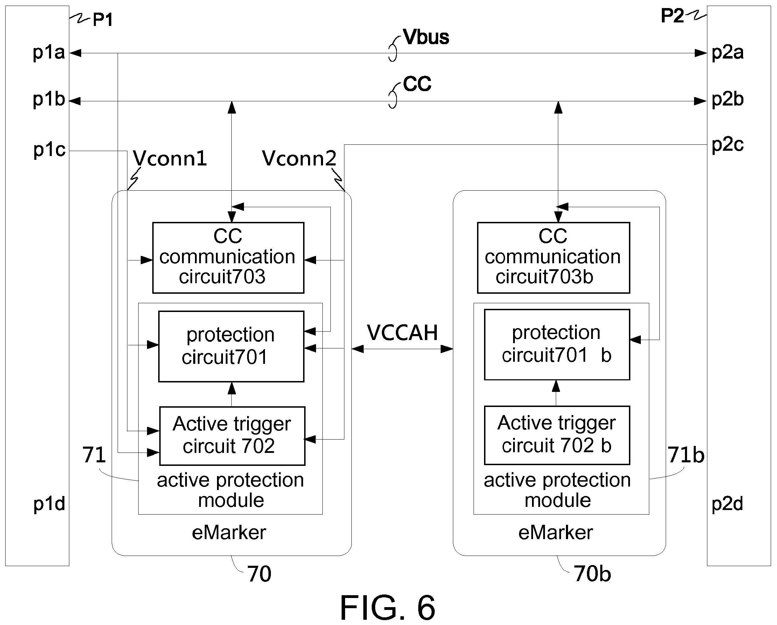

A cable with simplified eMarkers while achieving similar objects is developed and described with reference to FIG. 6. As shown, an eMarker device includes an eMarker 70 and an eMarker 70b, which are disposed near the port P1 and the port P2, respectively. The ports P1 and P2 play the roles of a source and a sink, respectively and interchangeably. The Vconn source is provided by the port P1, or interchangeably, the port P2. In this embodiment, only one of the eMarker 70 and eMarker 70b is coupled to both the pin p1c of the port P1 and the pin p2c of the port P2 via pins Vconn 1 and Vconn2. In the example shown in FIG. 6, it is the eMarker 70 coupled to the pin pic of the port P1 and the pin p2c of the port P2 via the pins Vconnl and Vconn2, respectively. Under this circumstance, the Vconn source, which may be the port P1 or the P2, can supply power to the eMarker 70 through the corresponding pin, e.g. the pin Vconnl or Vconn2, to support normal operations of an active protection module 71, which includes an active trigger circuit 702 and a protection circuit 701. Furthermore, in order to have the eMarker 70b acquire power to work normally, an internal power line VCCAH is disposed in the cable between the eMarker 70 and the eMarker 70b. Through the internal power line VCCAH, the eMarker 70b can drain power from the eMarker 70.

The active trigger circuit 702 of the eMarker 70 is coupled to the Vbus wire and disposed near the port P1. The active trigger circuit 702 determines whether an abnormal event occurs according to a supply characteristic of the Vbus wire and a temperature detected at a place where the active trigger circuit 702 is located,. If it is determined that an abnormal event happens, the active trigger circuit 702 triggers the protection circuit 701 to have the protection circuit 701 raise the voltage of the CC communication wire to a level higher than the predefined open-circuit voltage. Then the source port will detect a disconnecting status so as to interrupt power supply through the Vbus wire, even if the two ports actually stay connected. Accordingly, the abnormal event can be ceased.

On the other hand, an active trigger circuit 702b of the eMarker 70b need not be coupled to the Vbus wire or Vconnl or Vconn2, but need be disposed near the port P2. The active trigger circuit 702b determines whether an abnormal event occurs according to a temperature detected at a place where the active trigger circuit 702b is located. If it is determined that an abnormal event happens, the active trigger circuit 702b triggers the protection circuit 701b of an active protection module 71b of the eMarker 70b to have a protection circuit 701b of an active protection module 71b of the eMarker 70b raise the voltage of the CC communication wire to a level higher than the predefined open-circuit voltage. Then the source port will detect a disconnecting status so as to interrupt power supply through the Vbus wire, even if the two ports actually stay connected. Accordingly, the abnormal event can be ceased.

It is understood from the above descriptions and the accompanying drawings, both the eMarker 70 and eMarker 70b are electrically connected to the CC wire, and share the CC wire for BMC communication. For simplifying circuitry and operations, both the CC communication circuit 703 of the eMarker 70 and the CC communication circuit 703b of the eMarker 70b may be designed to be responsive to only SOP' without responding to SOP".

To avoid errors, the CC communication circuit 703 and the CC communication circuit 703b are set to be operable under a specific condition. If the specific condition is not satisfied, the CC communication circuit 703 and the CC communication circuit 703b will be disabled. For example, the specific condition is normal connection of the pins Vconnl and Vconn2 to the pins pic and p2c, respectively, at the source port. Take FIG. 6 as an example. The pins Vconnl and Vconn2 of the eMarker 70 is electrically connected to the pin pic of the port P1 and the pin p2c of the port P2, respectively. Therefore, the CC communication circuit 703 will be enabled to operate normally, and the function of response to SOP' can normally performed. In contrast, the pins Vconn1 and Vconn2 of the eMarker 70b are not connected to any power source, i.e. the specific condition is not satisfied, so the SOP'-responding function of the CC communication circuit 703b is disabled. As a result, the CC communication circuit 703b will not respond to the SOP' transmitted on the CC wire, and only the CC communication circuit 703 responds to the SOP' transmitted on the CC wire, thereby avoiding errors. It is to be noted that the specific condition may alternatively set to have the CC communication circuit complying with the specific condition disabled while having the other CC communication circuit enabled. Briefly, as long as only one of the CC communication circuits is working at the same time point, errors can be avoided.

Alternatively, the specific condition is successful acquisition of power from another eMarker through the internal power line VCCAH. For example, once the eMarker 70b can acquire power from the eMarker 70, the function of response to SOP' of the CC communication circuit 703b is disabled. The function of response to SOP' can be disabled in one or more of the following ways. In a first example, the receiving and responding functions of the CC communication circuit 703b are both disabled. In a second example, the receiving function of the CC communication circuit 703b remains enabled while the function of response to SOP' is disabled. In a third example, the power of the CC communication circuit 703b is interrupted. In a further embodiment, the CC communication circuit 703b is omitted from the eMarker 70b. The eMarker 70b without a CC communication circuit is equipped in the cable 10 along with the eMarker 70 with the CC communication circuit 703. Furthermore, it is also feasible that the specific condition is successful acquisition of power through the internal power line VCCAH. When it is determined that the power is drained from the internal power line VCCAH, the function of response to SOP' remains enabled. Otherwise, the function of response to SOP' is disabled.

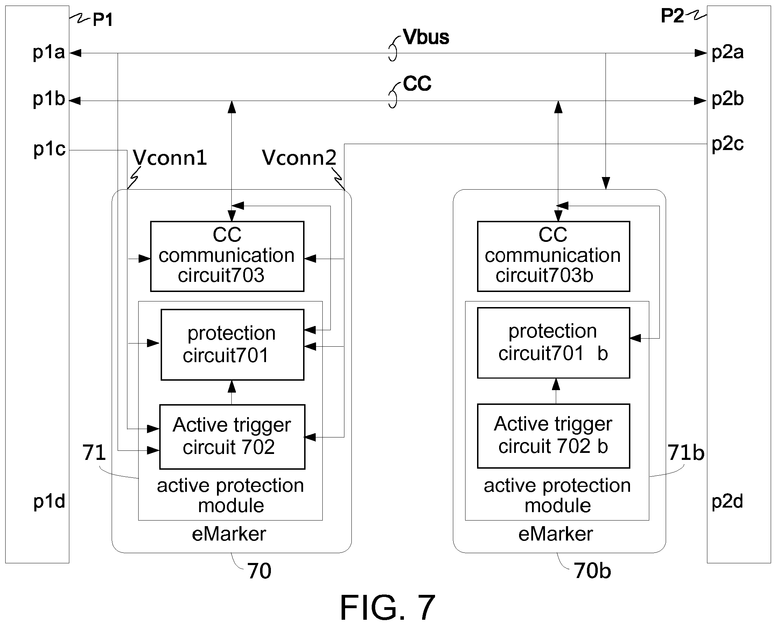

Referring to FIG. 7, another embodiment according to the present invention is illustrated. An eMarker device includes an eMarker 70 and an eMarker 70b, which are disposed near the port P1 and the port P2, respectively. The ports P1 and P2 play the roles of a source and a sink, respectively and interchangeably. The Vconn source is provided by the port P1, or interchangeably, the port P2. In this embodiment, only one of the eMarker 70 and eMarker 70b is coupled to both the pin pic of the port P1 and the pin p2c of the port P2 via pins Vconn1 and Vconn2. In the example shown in FIG. 7, it is the eMarker 70 coupled to the pin p1c of the port P1 and the pin p2c of the port P2 via the pins Vconn1 and Vconn2, respectively. Under this circumstance, the Vconn source, which may be the port P1 or the P2, can supply power to the eMarker 70 through the corresponding pin, e.g. the pin Vconnl or Vconn2, to support normal operations of an active protection module 71, which includes an active trigger circuit 702 and a protection circuit. Furthermore, in order to have the eMarker 70b acquire power to work normally, the eMarker 70b is coupled to the Vbus wire to drain power from the Vbus wire.

The active trigger circuit 702 of the eMarker 70 is coupled to the Vbus wire and disposed near the port P1. The active trigger circuit 702 determines whether an abnormal event occurs according to a supply characteristic of the Vbus wire and a temperature detected at a place where the active trigger circuit 702 is located. If it is determined that an abnormal event happens, the active trigger circuit 702 triggers the protection circuit 701 to have the protection circuit 701 raise the voltage of the CC communication wire to a level higher than the predefined open-circuit voltage. Then the source port will detect a disconnecting status so as to interrupt power supply through the Vbus wire, even if the two ports actually stay connected. Accordingly, the abnormal event can be ceased.

On the other hand, an active trigger circuit 702b of the eMarker 70b is coupled to the Vbus wire, and needs to be disposed near the port P2. The active trigger circuit 702b determines whether an abnormal event occurs according to a temperature detected at a place where the active trigger circuit 702b is located. If it is determined that an abnormal event happens, the active trigger circuit 702b triggers the protection circuit 701b of an active protection module 71b of the eMarker 70b to have a protection circuit 701b of an active protection module 71b of the eMarker 70b raise the voltage of the CC communication wire to a level higher than the predefined open-circuit voltage. Then the source port will detect a disconnecting status so as to interrupt power supply through the Vbus wire, even if the two ports actually stay connected. Accordingly, the abnormal event can be ceased.

It is understood from the above descriptions and the accompanying drawings, both the eMarker 70 and eMarker 70b are electrically connected to the CC wire, and share the CC wire for BMC communication. For simplifying circuitry and operations, both the CC communication circuit 703 of the eMarker 70 and the CC communication circuit 703b of the eMarker 70b may be designed to be responsive to only SOP' without responding to SOP".

To avoid errors, the CC communication circuit 703 and the CC communication circuit 703b are set to be operable under a specific condition. If the specific condition is not satisfied, the CC communication circuit 703 and the CC communication circuit 703b will be disabled. For example, the specific condition is normal connection of the pins Vconnl and Vconn2 to the pins pic and p2c, respectively, at the source port. Take FIG. 6 as an example. The pins Vconnl and Vconn2 of the eMarker 70 are electrically connected to the pin p1c of the port P1 and the pin p2c of the port P2, respectively. Therefore, the CC communication circuit 703 will be enabled to operate normally, and the function of response to SOP' can normally performed. In contrast, the pins Vconnl and Vconn2 of the eMarker 70b are not connected to any power source, i.e. the specific condition is not satisfied, so the SOP'-responding the CC communication circuit 703b is disabled. As a result, the CC communication circuit 703b will not respond to the SOP' transmitted on the CC wire, and only the CC communication circuit 703 responds to the SOP' transmitted on the CC wire, thereby avoiding errors. It is to be noted that the specific condition may alternatively set to have the CC communication circuit complying with the specific condition disabled while having the other CC communication circuit enabled. Briefly, as long as only one of the CC communication circuits is working at the same time point, errors can be avoided.

The foregoing makes it clear that according to the present invention, the eMarker device and the cable equipped with eMarker device are capable of managing power in an active and safe manner. The power management method executed in the eMarker device and the cable equipped with eMarker device actively and well protects the devices when an abnormal event happens. Furthermore, the functions of the eMarker device and the cable equipped with eMarker device, and the power management method executed in the eMarker device and the cable equipped with eMarker device, are not limited by the USB specification for passive power transmission, and not limited to simple response to a request from the receiving port. Furthermore, it is conventionally required that both the ports P1 and P2 support the USB specification for power transmission. The present invention, in contrast, can actively maintain safe power transmission even if the port P1 and/or the port P2 do not support the USB specification for power transmission. In the devices and method developed according to the present invention, not only the ports interconnected by the cable are protected, but the cable and eMarker device themselves can be protected.

## Claims

1. An eMarker device for use in a USB type-C cable (10) electrically connected between a first port (P1) and a second port (P2), wherein the cable (10) includes a configuration channel communication wire (CC) and a bus power wire (Vbus), and the eMarker device comprises:
a first eMarker (60, 70) disposed near the first port (P1) and including a first active protection module (40, 71) coupled to the configuration channel communication wire (CC); and
a second eMarker (60b, 70b) disposed near the second port (P2) and including a second active protection module (40b, 71b) coupled to the configuration channel communication wire (CC),
the eMarker device **characterized in that**:
only one of the first eMarker (60, 70) and the second eMarker (60b, 70b) is electrically connected to a first power pin (Vconn1) of the first port (P1) and a second power pin (Vconn2) of the second port (P2), and the only one eMarker is the first eMarker (60, 70),
the first active protection module (40, 71) which is coupled to the bus power wire (Vbus) having connections to a third power pin (p1a) of the first port (P1) and to a fourth power pin (p2a) of the second port (P2), is configured to determine whether a first specified event happens according to a supply characteristic of the bus power wire (Vbus), and to raise a voltage of the configuration channel communication wire (CC) to a level higher than a predetermined open-circuit voltage to have one of the first port (P1) and the second port (P2) determine that the cable (10) connected between the first port (P1) and the second port (P2) is detached from the other one of the first port (P1) and the second port (P2) when the first specified event happens in the cable (10),
the second active protection module (40b, 71b) is configured to raise the voltage of the configuration channel communication wire (CC) to a level higher than the predetermined open-circuit voltage to have the one of the first port (P1) and the second port (P2) determine that the cable (10) connected between the first port (P1) and the second port (P2) is detached from the other one of the first port (P1) and the second port (P2) when a second specified event happens in the cable (10) near the second port (P2).

2. The eMarker device according to claim 1, wherein the first specified event or the second specified event comprises an abnormal temperature event.

3. The eMarker device according to claim 1, wherein the first active protection module (40, 71) includes a first active trigger circuit (20, 702) and a first protection circuit (30, 701), wherein the first active trigger circuit (20, 702) is configured to determine whether the first specified event happens according to a temperature detected at a place where the first active trigger circuit (20, 702) is located and the supply characteristic of the bus power wire (Vbus), and is configured to trigger the first protection circuit (30, 701) to raise the voltage of the configuration channel communication wire (CC) to a level higher than the predetermined open-circuit voltage, thereby having the one of the first port (P1) and the second port (P2) determine that the cable (10) connected between the first port (P1) and the second port (P2) is detached from the other one of the first port (P1) and the second port (P2) and having a power supply through the bus power wire (Vbus) suspended.

4. The eMarker device according to claim 1, wherein the second eMarker (60b, 70b) is configured to drain power from the first eMarker (60, 70) through an internal power line (VCCAH), or the second eMarker (60b, 70b) is configured to drain power through the bus power wire (Vbus) of the cable (10).

5. The eMarker device according to claim 4, wherein the second active protection module (40b, 71b) includes a second active trigger circuit (20b, 702b) and a second protection circuit (30b, 701b), wherein the second active trigger circuit (20b, 702b) is configured to determine whether the second specified event happens according to a temperature detected at a place where the second active trigger circuit (20b, 702b) is located, and to trigger the second protection circuit (30b, 701b) to raise the voltage of the configuration channel communication wire (CC) to a level higher than the predetermined open-circuit voltage, thereby having the one of the first port (P1) and the second port (P2) determine that the cable (10) connected between the first port (P1) and the second port (P2) is detached from the other one of the first port (P1) and the second port (P2).

6. The eMarker device according to claim 4, wherein the second active protection module (40b, 71b) includes a second active trigger circuit (20b, 702b) and a second protection circuit (30b, 701b), wherein the second active trigger circuit (20b, 702b) is configured to determine whether the second specified event happens according to a temperature detected at a place where the second active trigger circuit (20b, 702b) is located and a supply characteristic of the bus power wire (Vbus), and to trigger the second protection circuit (30b, 701b) to raise the voltage of the configuration channel communication wire (CC) to a level higher than the predetermined open-circuit voltage, thereby having the one of the first port (P1) and the second port (P2) determine that the cable (10) connected between the first port (P1) and the second port (P2) is detached from the other one of the first port (P1) and the second port (P2).

7. The eMarker device according to claim 4, wherein the first active protection module (40, 71) includes a first configuration channel communication circuit (50, 703), and the second active protection module (40b, 71b) includes a second configuration channel communication circuit (50b, 703b), and the first configuration channel communication circuit (50, 703) is configured to be operable while the second configuration channel communication circuit (50b, 703b) is configured to be disabled when a specific condition is satisfied, wherein the specific condition is successful acquisition of power from the first eMarker (60, 70) to the second eMarker (60b, 70b) through the internal power line (VCCAH).

8. The eMarker device according to claim 4, wherein the first active protection module (40, 71) includes a first configuration channel communication circuit (50, 703), and the second active protection module (40b, 71b) includes a second configuration channel communication circuit (50b, 703b), and the second configuration channel communication circuit (50b, 703b) is configured to be operable while the first configuration channel communication circuit (50, 703) is configured to be disabled when a specific condition is satisfied, wherein the specific condition is successful acquisition of power from the first eMarker (60, 70) to the second eMarker (60b, 70b) through the internal power line (VCCAH).

9. The eMarker device according to claim 1, wherein the first active protection module (40, 71) includes a first configuration channel communication circuit (50, 703), and the second active protection module (40b, 71b) includes a second configuration channel communication circuit (50b, 703b), and the first configuration channel communication circuit (50, 703) and second configuration channel communication circuit (50b, 703b) are configured in a manner that when a specific condition is satisfied, the configuration channel communication circuit (50, 50b, 703, 703b) is operable, and when the specific condition is dissatisfied, the configuration channel communication circuit (50, 50b, 703, 703b) is disabled, wherein the specific condition is normal connection to the first power pin (Vconn1) of the first port (P1) and the second power pin (Vconn2) of the second port (P2).

10. The eMarker device according to claim 1, wherein the first active protection module (40, 71) includes a first configuration channel communication circuit (50, 703), and the second active protection module (40b, 71b) includes a second configuration channel communication circuit (50b, 703b), and the first configuration channel communication circuit (50, 703) and second configuration channel communication circuit (50b, 703b) are configured in a manner that when a specific condition is dissatisfied, the configuration channel communication circuit (50, 50b, 703, 703b) is operable, and when the specific condition is satisfied, the configuration channel communication circuit (50, 50b, 703, 703b) is disabled, wherein the specific condition is normal connection to the first power pin (Vconn1) of the first port (P1) and the second power pin (Vconn2) of the second port (P2).

11. The eMarker device according to claim 1, wherein the first active protection module (40, 71) includes a configuration channel communication circuit (50, 703), and the second active protection module (40b, 71b) does not include the configuration channel communication circuit.

12. A USB type-C cable to be electrically connected between a first port (P1) and a second port (P2), **characterized in** comprising:
a configuration channel communication wire (CC), a bus power wire (Vbus); and
an eMarker device as recited in any of claims 1 to 11.

13. A power management method of a USB type-C cable (10) electrically connected between a first port (P1) and a second port (P2), the cable (10) comprising a configuration channel communication wire (CC) and a bus power wire (Vbus), the method being **characterized in** comprising:
changing an electric characteristic of the configuration channel communication wire (CC) with a first eMarker (60, 70) by raising a voltage of the configuration channel communication wire (CC) to a level higher than a predetermined open-circuit voltage, to have one of the first port (P1) and the second port (P2) determine that the cable (10) connected between the first port (P1) and the second port (P2) is detached from the other one of the first port (P1) and the second port (P2) when a first specified event happens in the cable (10) according to a supply characteristic of the bus power wire (Vbus); and
changing an electric characteristic of the configuration channel communication wire (CC) with a second eMarker (60b, 70b) by raising the voltage of the configuration channel communication wire (CC) to a level higher than the predetermined open-circuit voltage, to have the one of the first port (P1) and the second port (P2) determine that the cable (10) connected between the first port (P1) and the second port (P2) is detached from the other one of the first port (P1) and the second port (P2) when a second specified event happens in the cable (10) near the second port (P2),
wherein only one of the first eMarker (60, 70) and the second eMarker (60b, 70b) is electrically connected to a first power pin (Vconn1) of the first port (P1) and a second power pin (Vconn2) of the second port (P2), and wherein the bus power wire (Vbus) has connections to a third power pin (p1a) of the first port (P1) and to a fourth power pin (p2a) of the second port (P2).

14. The method according to claim 13, wherein the first specified event or the second specified event is an abnormal temperature event.

15. The method according to claim 13, wherein the first eMarker (60, 70) includes a first active trigger circuit (20, 702) and a first protection circuit (30, 701), wherein the first active trigger circuit (20, 702) determines whether the first specified event happens according to a temperature detected at a place where the first active trigger circuit (20, 702) is located and the supply characteristic of the bus power wire (Vbus), and triggers the first protection circuit (30, 701) to raise the voltage of the configuration channel communication wire (CC) to a level higher than the predetermined open-circuit voltage, thereby having the one of the first port (P1) and the second port (P2) determine that the cable (10) connected between the first port (P1) and the second port (P2) is detached from the other one of the first port (P1) and the second port (P2) and having a power supply through the bus power wire (Vbus) suspended.

16. The method according to claim 13, wherein the second eMarker (60b, 70b) drains power from the first eMarker (60, 70) through an internal power line (VCCAH), or the second eMarker (60b, 70b) drains power through the bus power wire (Vbus) of the cable (10).

17. The method according to claim 16, wherein:
the first eMarker (60, 70) or the second eMarker (60b, 70b) changes the electric characteristic of the configuration channel communication wire (CC) by raising the voltage of the configuration channel communication wire (CC) to a level higher than the predetermined open-circuit voltage, thereby having the one of the first port (P1) and the second port (P2) determine that the cable (10) connected between the first port (P1) and the second port (P2) is detached from the other one of the first port (P1) and the second port (P2) and having a power supply through the bus power wire (Vbus) of the cable (10) suspended; or
the second eMarker (60b, 70b) includes a second active trigger circuit (20b, 702b) and a second protection circuit (30b, 701b), wherein the second active trigger circuit (20b, 702b) determines whether the second specified event happens according to a temperature detected at a place where the second active trigger circuit (20b, 702b) is located, and triggers the second protection circuit (30b, 701b) to raise the voltage of the configuration channel communication wire (CC) to a level higher than the predetermined open-circuit voltage, thereby having the one of the first port (P1) and the second port (P2) determine that the cable (10) connected between the first port (P1) and the second port (P2) is detached from the other one of the first port (P1) and the second port (P2); or
the second eMarker (60b, 70b) includes a second active trigger circuit (20b, 702b) and a second protection circuit (30b, 701b), wherein the second active trigger circuit (20b, 702b) determines whether the second specified event happens according to a temperature detected at a place where the second active trigger circuit (20b, 702b) is located and the supply characteristic of the bus power wire (Vbus), and triggers the second protection circuit (30b, 701b) to raise the voltage of the configuration channel communication wire (CC) to a level higher than the predetermined open-circuit voltage, thereby having the one of the first port (P1) and the second port (P2) determine that the cable (10) connected between the first port (P1) and the second port (P2) is detached from the other one of the first port (P1) and the second port (P2); or
the first eMarker (60, 70) includes a first configuration channel communication circuit (50, 703), and the second eMarker (60b, 70b) includes a second configuration channel communication circuit (50b, 703b), and the first configuration channel communication circuit (50, 703) is set to be operable while the second configuration channel communication circuit (50b, 703b) is set to be disabled when a specific condition is satisfied, wherein the specific condition is successful acquisition of power from the first eMarker (60, 70) to the second eMarker (60b, 70b) through the internal power line (VCCAH); or
the first eMarker (60, 70) includes a first configuration channel communication circuit (50, 703), and the second eMarker (60b, 70b) includes a second configuration channel communication circuit (50b, 703b), and the second configuration channel communication circuit (50b, 703b) is set to be operable while the first configuration channel communication circuit (50, 703) is set to be disabled when a specific condition is satisfied, wherein the specific condition is successful acquisition of power from the first eMarker (60, 70) to the second eMarker (60b, 70b) through the internal power line (VCCAH).

18. The method according to claim 13, wherein:
the first eMarker (60, 70) includes a first configuration channel communication circuit (50, 703), and the second eMarker (60b, 70b) includes a second configuration channel communication circuit (50b, 703b), and the first configuration channel communication circuit (50, 703) and second configuration channel communication circuit (50b, 703b) are set in a manner that when a specific condition is satisfied, the configuration channel communication circuit (50, 50b, 703, 703b) is operable, and when the specific condition is dissatisfied, the configuration channel communication circuit (50, 50b, 703, 703b) is disabled, wherein the specific condition is normal connection to the first power pin (Vconn1) of the first port (P1) and the second power pin (Vconn2) of the second port (P2); or
the first eMarker (60, 70) includes a first configuration channel communication circuit (50, 703), and the second eMarker (60b, 70b) includes a second configuration channel communication circuit (50b, 703b), and the first configuration channel communication circuit (50, 703) and second configuration channel communication circuit (50,b, 703b) are set in a manner that when a specific condition is dissatisfied, the configuration channel communication circuit (50, 50b, 703, 703b) is operable, and when the specific condition is satisfied, the configuration channel communication circuit (50, 50b, 703, 703b) is disabled, wherein the specific condition is normal connection to the first power pin (Vconn1) of the first port (P1) and the second power pin (Vconn2) of the second port (P2); or
the first eMarker (60, 70) includes a configuration channel communication circuit, and the second eMarker (60b, 70b) does not include the configuration channel communication circuit.

## Patentansprüche

1. eMarker-Vorrichtung zur Verwendung in einem USB-Kabel (10) vom Typ C, das elektrisch zwischen einem ersten Anschluss (P1) und einem zweiten Anschluss (P2) verbunden ist, wobei das Kabel (10) einen Konfigurationskanalkommunikationsdraht (CC) und einen Busspannungsdraht (Vbus) umfasst und die eMarker-Vorrichtung Folgendes umfasst:
einen ersten eMarker (60, 70) der nahe dem ersten Anschluss (P1) angeordnet ist und ein erstes aktives Schutzmodul (40, 71) umfasst, das an den Konfigurationskanalkommunikationsdraht (CC) gekoppelt ist; und
einen zweiten eMarker (60b, 70b), der nahe dem zweiten Anschluss (P2) angeordnet ist und ein zweites aktives Schutzmodul (40b, 71b) umfasst, das an den Konfigurationskanalkommunikationsdraht (CC) gekoppelt ist,
wobei die eMarker-Vorrichtung durch Folgendes gekennzeichnet ist:
lediglich einer von dem ersten eMarker (60, 70) und dem zweiten eMarker (60b, 70b) ist elektrisch mit einem ersten Leistungsstift (Vconn1) des ersten Anschlusses (P1) und einem zweiten Leistungsstift (Vconn2) des zweiten Anschlusses (P2) verbunden und der lediglich eine eMarker ist der erste eMarker (60, 70),
das erste aktive Schutzmodul (40, 71), das an den Busspannungsdraht (Vbus) gekoppelt ist, der Verbindungen zu einem dritten Leistungsstift (p1a) des ersten Anschlusses (P1) und zu einem vierten Leistungsstift (p2a) des zweiten Anschlusses (P2) aufweist, ist konfiguriert, um zu bestimmen, ob ein erstes vorgegebenes Ereignis gemäß einer Zufuhreigenschaft des Busspannungsdrahtes (Vbus) eintritt, und um eine Spannung des Konfigurationskanalkommunikationsdrahtes (CC) auf einen Pegel zu erhöhen, der höher als eine vorbestimmte Leerlaufspannung ist, um einen von dem ersten Anschluss (P1) und dem zweiten Anschluss (P2) bestimmen zu lassen, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist, wenn das erste vorgegebene Ereignis in dem Kabel (10) eintritt,
das zweite aktive Schutzmodul (40b, 71b) ist konfiguriert, um die Spannung des Konfigurationskanalkommunikationsdrahtes (CC) auf einen Pegel zu erhöhen, der höher als die vorbestimmte Leerlaufspannung ist, um einen von dem ersten Anschluss (P1) und dem zweiten Anschluss (P2) bestimmen zu lassen, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist, wenn ein zweites vorgegebenes Ereignis in dem Kabel (10) nahe dem zweiten Anschluss (P2) eintritt.

2. eMarker-Vorrichtung nach Anspruch 1, wobei das erste vorgegebene Ereignis oder das zweite vorgegebene Ereignis ein abnormales Temperaturereignis umfasst.

3. eMarker-Vorrichtung nach Anspruch 1, wobei das erste aktive Schutzmodul (40, 71) eine erste aktive Auslöseschaltung (20, 702) und eine erste Schutzschaltung (30, 701) umfasst, wobei die erste aktive Auslöseschaltung (20, 702) konfiguriert ist, um zu bestimmen, ob das erste vorgegebene Ereignis gemäß einer Temperatur eintritt, die an einer Stelle erfasst wird, an der sich die erste aktive Auslöseschaltung (20, 702) befindet, und um die Zufuhreigenschaft des Busspannungsdrahtes (Vbus) zu bestimmen, und konfiguriert ist, um die erste Schutzschaltung (30, 701) auszulösen, um die Spannung des Konfigurationskanalkommunikationsdrahtes (CC) auf einen Pegel zu erhöhen, der höher als die vorbestimmte Leerlaufspannung ist, wodurch der eine von dem ersten Anschluss (P1) und dem zweiten Anschluss (P2) bestimmt, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist und eine Stromzufuhr durch den Busspannungsdraht (Vbus) unterbrochen ist.

4. eMarker-Vorrichtung nach Anspruch 1, wobei der zweite eMarker (60b, 70b) konfiguriert ist, um dem ersten eMarker (60, 70) durch eine innere Stromleitung (VCCAH) Strom zu entziehen, oder der zweite eMarker (60b, 70b) konfiguriert ist, um durch den Busspannungsdraht (Vbus) des Kabels (10) Strom zu entziehen.

5. eMarker-Vorrichtung nach Anspruch 4, wobei das zweite aktive Schutzmodul (40b, 71b) eine zweite aktive Auslöseschaltung (20b, 702b) und eine zweite Schutzschaltung (30b, 701b) umfasst, wobei die zweite aktive Auslöseschaltung (20b, 702b) konfiguriert ist, um zu bestimmen, ob das zweite vorgegebene Ereignis gemäß einer Temperatur eintritt, die an einer Stelle erfasst wird, an der sich die zweite aktive Auslöseschaltung (20b, 702b) befindet, und um die zweite Schutzschaltung (30b, 701b) auszulösen, um die Spannung des Konfigurationskanalkommunikationsdrahtes (CC) auf einen Pegel zu erhöhen, der höher als die vorbestimmte Leerlaufspannung ist, wodurch der eine von dem ersten Anschluss (P1) und dem zweiten Anschluss (P2) bestimmt, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist.

6. eMarker-Vorrichtung nach Anspruch 4, wobei das zweite aktive Schutzmodul (40b, 71b) eine zweite aktive Auslöseschaltung (20b, 702b) und eine zweite Schutzschaltung (30b, 701b) umfasst, wobei die zweite aktive Auslöseschaltung (20b, 702b) konfiguriert ist, um zu bestimmen, ob das zweite vorgegebene Ereignis gemäß einer Temperatur eintritt, die an einer Stelle erfasst wird, an der sich die zweite aktive Auslöseschaltung (20b, 702b) befindet, und um eine Zufuhreigenschaft des Busspannungsdrahtes (Vbus) zu bestimmen, und um die zweite Schutzschaltung (30b, 701b) auszulösen, um die Spannung des Konfigurationskanalkommunikationsdrahtes (CC) auf einen Pegel zu erhöhen, der höher als die vorbestimmte Leerlaufspannung ist, wodurch der eine von dem ersten Anschluss (P1) und dem zweiten Anschluss (P2) bestimmt, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist.

7. eMarker-Vorrichtung nach Anspruch 4, wobei das erste aktive Schutzmodul (40, 71) eine erste Konfigurationskanalkommunikationsschaltung (50, 703) umfasst und das zweite aktive Schutzmodul (40b, 71b) eine zweite Konfigurationskanalkommunikationsschaltung (50b, 703b) umfasst und die erste Konfigurationskanalkommunikationsschaltung (50, 703) konfiguriert ist, um betriebsfähig zu sein, während die zweite Konfigurationskanalkommunikationsschaltung (50b, 703b) konfiguriert ist, um deaktiviert zu sein, wenn eine spezifische Bedingung erfüllt ist, wobei es sich bei der spezifischen Bedingung um einen erfolgreichen Erwerb von Strom von dem ersten eMarker (60, 70) durch die innere Stromleitung (VCCAH) zu dem zweiten eMarker (60b, 70b) handelt.

8. eMarker-Vorrichtung nach Anspruch 4, wobei das erste aktive Schutzmodul (40, 71) eine erste Konfigurationskanalkommunikationsschaltung (50, 703) umfasst und das zweite aktive Schutzmodul (40b, 71b) eine zweite Konfigurationskanalkommunikationsschaltung (50b, 703b) umfasst und die zweite Konfigurationskanalkommunikationsschaltung (50b, 703b) konfiguriert ist, um betriebsfähig zu sein, während die erste Konfigurationskanalkommunikationsschaltung (50, 703) konfiguriert ist, um deaktiviert zu sein, wenn eine spezifische Bedingung erfüllt ist, wobei es sich bei der spezifischen Bedingung um einen erfolgreichen Erwerb von Strom von dem ersten eMarker (60, 70) durch die innere Stromleitung (VCCAH) zu dem zweiten eMarker (60b, 70b) handelt.

9. eMarker-Vorrichtung nach Anspruch 1, wobei das erste aktive Schutzmodul (40, 71) eine erste Konfigurationskanalkommunikationsschaltung (50, 703) umfasst und das zweite aktive Schutzmodul (40b, 71b) eine zweite Konfigurationskanalkommunikationsschaltung (50b, 703b) umfasst und die erste Konfigurationskanalkommunikationsschaltung (50, 703) und die zweite Konfigurationskanalkommunikationsschaltung (50b, 703b) auf eine Weise konfiguriert sind, dass, wenn eine spezifische Bedingung erfüllt ist, die Konfigurationskanalkommunikationsschaltung (50, 50b, 703, 703b) betriebsfähig ist, und wenn die spezifische Bedingung nicht erfüllt ist, die Konfigurationskanalkommunikationsschaltung (50, 50b, 703, 703b) deaktiviert ist, wobei es sich bei der spezifischen Bedingung um eine normale Verbindung mit dem ersten Leistungsstift (Vconn1) des ersten Anschlusses (P1) und dem zweiten Leistungsstift (Vconn2) des zweiten Anschlusses (P2) handelt.

10. eMarker-Vorrichtung nach Anspruch 1, wobei das erste aktive Schutzmodul (40, 71) eine erste Konfigurationskanalkommunikationsschaltung (50, 703) umfasst und das zweite aktive Schutzmodul (40b, 71b) eine zweite Konfigurationskanalkommunikationsschaltung (50b, 703b) umfasst und die erste Konfigurationskanalkommunikationsschaltung (50, 703) und die zweite Konfigurationskanalkommunikationsschaltung (50b, 703b) auf eine Weise konfiguriert sind, dass, wenn eine spezifische Bedingung nicht erfüllt ist, die Konfigurationskanalkommunikationsschaltung (50, 50b, 703, 703b) betriebsfähig ist, und wenn die spezifische Bedingung erfüllt ist, die Konfigurationskanalkommunikationsschaltung (50, 50b, 703, 703b) deaktiviert ist, wobei es sich bei der spezifischen Bedingung um eine normale Verbindung mit dem ersten Leistungsstift (Vconn1) des ersten Anschlusses (P1) und dem zweiten Leistungsstift (Vconn2) des zweiten Anschlusses (P2) handelt.

11. eMarker-Vorrichtung nach Anspruch 1, wobei das erste aktive Schutzmodul (40, 71) eine Konfigurationskanalkommunikationsschaltung (50, 703) umfasst und das zweite aktive Schutzmodul (40b, 71b) nicht die Konfigurationskanalkommunikationsschaltung umfasst.

12. USB-Kabel vom Typ C zum elektrischen Verbinden zwischen einem ersten Anschluss (P1) und einem zweiten Anschluss (P2), **gekennzeichnet durch**:
einen Konfigurationskanalkommunikationsdraht (CC), einen Busspannungsdraht (Vbus); und
eine eMarker-Vorrichtung nach einem der Ansprüche 1 bis 11.

13. Stromverwaltungsverfahren eines USB-Kabels (10) vom Typ C, das zwischen einem ersten Anschluss (P1) und einem zweiten Anschluss (P2) elektrisch verbunden ist, wobei das Kabel (10) einen Konfigurationskanalkommunikationsdraht (CC) und einen Busspannungsdraht (Vbus) umfasst und das Verfahren **dadurch gekennzeichnet ist, dass** es Folgendes umfasst:
Ändern einer elektrischen Eigenschaft des Konfigurationskanalkommunikationsdrahtes (CC) mit einem ersten eMarker (60, 70) durch Erhöhen einer Spannung des Konfigurationskanalkommunikationsdrahtes (CC) auf einen Pegel, der höher als eine vorbestimmte Leerlaufspannung ist, um einen von dem ersten Anschluss (P1) und dem zweiten Anschluss (P2) bestimmen zu lassen, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist, wenn ein erstes vorgegebenes Ereignis gemäß einer Zufuhreigenschaft des Busspannungsdrahtes (Vbus) in dem Kabel (10) eintritt; und
Ändern einer elektrischen Eigenschaft des Konfigurationskanalkommunikationsdrahtes (CC) mit einem zweiten eMarker (60b, 70b) durch Erhöhen der Spannung des Konfigurationskanalkommunikationsdrahtes (CC) auf einen Pegel, der höher als die vorbestimmte Leerlaufspannung ist, um den einen von dem ersten Anschluss (P1) und dem zweiten Anschluss (P2) bestimmen zu lassen, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist, wenn ein zweites vorgegebenes Ereignis in dem Kabel (10) nahe dem zweiten Anschluss (P2) eintritt,
wobei lediglich einer von dem ersten eMarker (60, 70) und dem zweiten eMarker (60b, 70b) elektrisch mit einem ersten Leistungsstift (Vconn1) des ersten Anschlusses (P1) und einem zweiten Leistungsstift (Vconn2) des zweiten Anschlusses (P2) verbunden ist und wobei der Busspannungsdraht (Vbus) Verbindungen zu einem dritten Leistungsstift (p1a) des ersten Anschlusses (P1) und zu einem vierten Leistungsstift (p2a) des zweiten Anschlusses (P2) aufweist.

14. Verfahren nach Anspruch 13, wobei das erste vorgegebene Ereignis oder das zweite vorgegebene Ereignis ein abnormales Temperaturereignis ist.

15. Verfahren nach Anspruch 13, wobei der erste eMarker (60, 70) eine erste aktive Auslöseschaltung (20, 702) und eine erste Schutzschaltung (30, 701) umfasst, wobei die erste aktive Auslöseschaltung (20, 702) bestimmt, ob das erste vorgegebene Ereignis gemäß einer Temperatur eintritt, die an einer Stelle erfasst wird, an der sich die erste aktive Auslöseschaltung (20, 702) befindet, und die Zufuhreigenschaft des Busspannungsdrahtes (Vbus) bestimmt und die erste Schutzschaltung (30, 701) auslöst, um die Spannung des Konfigurationskanalkommunikationsdrahtes (CC) auf einen Pegel zu erhöhen, der höher als die vorbestimmte Leerlaufspannung ist, wodurch der eine von dem ersten Anschluss (P1) und dem zweiten Anschluss (P2) bestimmt, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist und eine Stromzufuhr durch den Busspannungsdraht (Vbus) unterbrochen ist.

16. Verfahren nach Anspruch 13, wobei der zweite eMarker (60b, 70b) dem ersten eMarker (60, 70) Strom durch eine innere Stromleitung (VCCAH) entzieht, oder der zweite eMarker (60b, 70b) durch den Busspannungsdraht (Vbus) des Kabels (10) Strom entzieht.

17. Verfahren nach Anspruch 16, wobei:
der erste eMarker (60, 70) oder der zweite eMarker (60b, 70b) die elektrischen Eigenschaft des Konfigurationskanalkommunikationsdrahtes (CC) durch Erhöhen der Spannung des Konfigurationskanalkommunikationsdrahtes (CC) auf einen Pegel, der höher als die vorbestimmte Leerlaufspannung ist, ändert, um dadurch einen von dem ersten Anschluss (P1) und dem zweiten Anschluss (P2) bestimmen zu lassen, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist, und wobei eine Stromzufuhr durch den Busspannungsdraht (Vbus) des Kabels (10) unterbrochen ist; oder
der zweite eMarker (60b, 70b) eine zweite aktive Auslöseschaltung (20b, 702b) und eine zweite Schutzschaltung (30b, 701b) umfasst, wobei die zweite aktive Auslöseschaltung (20b, 702b) bestimmt, ob das zweite vorgegebene Ereignis gemäß einer Temperatur eintritt, die an einer Stelle erfasst wird, an der sich die zweite aktive Auslöseschaltung (20b, 702b) befindet, und die zweite Schutzschaltung (30b, 701b) auslöst, um die Spannung des Konfigurationskanalkommunikationsdrahtes (CC) auf einen Pegel zu erhöhen, der höher als die vorbestimmte Leerlaufspannung ist, wodurch der eine von dem ersten Anschluss (P1) und dem zweiten Anschluss (P2) bestimmt, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist; oder
der zweite eMarker (60b, 70b) eine zweite aktive Auslöseschaltung (20b, 702b) und eine zweite Schutzschaltung (30b, 701b) umfasst, wobei die zweite aktive Auslöseschaltung (20b, 702b) bestimmt, ob das zweite vorgegebene Ereignis gemäß einer Temperatur eintritt, die an einer Stelle erfasst wird, an der sich die zweite aktive Auslöseschaltung (20b, 702b) befindet, und die Zufuhreigenschaft des Busspannungsdrahtes (Vbus) bestimmt und die zweite Schutzschaltung (30b, 701b) auslöst, um die Spannung des Konfigurationskanalkommunikationsdrahtes (CC) auf einen Pegel zu erhöhen, der höher als die vorbestimmte Leerlaufspannung ist, wodurch der eine von dem ersten Anschluss (P1) und dem zweiten Anschluss (P2) bestimmt, dass das zwischen dem ersten Anschluss (P1) und dem zweiten Anschluss (P2) verbundene Kabel (10) von dem anderen von dem ersten Anschluss (P1) und dem zweiten Anschluss (P2) gelöst ist; oder
der erste eMarker (60, 70) eine erste Konfigurationskanalkommunikationsschaltung (50, 703) umfasst und der zweite eMarker (60b, 70b) eine zweite Konfigurationskanalkommunikationsschaltung (50b, 703b) umfasst und die erste Konfigurationskanalkommunikationsschaltung (50, 703) eingestellt ist, um betriebsfähig zu sein, während die zweite Konfigurationskanalkommunikationsschaltung (50b, 703b) eingestellt ist, um deaktiviert zu sein, wenn eine spezifische Bedingung erfüllt ist, wobei es sich bei der spezifischen Bedingung um einen erfolgreichen Erwerb von Strom von dem ersten eMarker (60, 70) durch die innere Stromleitung (VCCAH) zu dem zweiten eMarker (60b, 70b) handelt; oder
der erste eMarker (60, 70) eine erste Konfigurationskanalkommunikationsschaltung (50, 703) umfasst und der zweite eMarker (60b, 70b) eine zweite Konfigurationskanalkommunikationsschaltung (50b, 703b) umfasst und die zweite Konfigurationskanalkommunikationsschaltung (50b, 703b) eingestellt ist, um betriebsfähig zu sein, während die erste Konfigurationskanalkommunikationsschaltung (50, 703) eingestellt ist, um deaktiviert zu sein, wenn eine spezifische Bedingung erfüllt ist, wobei es sich bei der spezifischen Bedingung um einen erfolgreichen Erwerb von Strom von dem ersten eMarker (60, 70) durch die innere Stromleitung (VCCAH) zu dem zweiten eMarker (60b, 70b) handelt.

18. Verfahren nach Anspruch 13, wobei:
der erste eMarker (60, 70) eine erste Konfigurationskanalkommunikationsschaltung (50, 703) umfasst und der zweite eMarker (60b, 70b) eine zweite Konfigurationskanalkommunikationsschaltung (50b, 703b) umfasst und die erste Konfigurationskanalkommunikationsschaltung (50, 703) und die zweite Konfigurationskanalkommunikationsschaltung (50b, 703b) auf eine Weise eingestellt sind, dass, wenn eine spezifische Bedingung erfüllt ist, die Konfigurationskanalkommunikationsschaltung (50, 50b, 703, 703b) betriebsfähig ist, und wenn die spezifische Bedingung nicht erfüllt ist, die Konfigurationskanalkommunikationsschaltung (50, 50b, 703, 703b) deaktiviert ist, wobei es sich bei der spezifischen Bedingung um eine normale Verbindung mit dem ersten Leistungsstift (Vconn1) des ersten Anschlusses (P1) und dem zweiten Leistungsstift (Vconn2) des zweiten Anschlusses (P2) handelt; oder
der erste eMarker (60, 70) eine erste Konfigurationskanalkommunikationsschaltung (50, 703) umfasst und der zweite eMarker (60b, 70b) eine zweite Konfigurationskanalkommunikationsschaltung (50b, 703b) umfasst und die erste Konfigurationskanalkommunikationsschaltung (50, 703) und die zweite Konfigurationskanalkommunikationsschaltung (50b, 703b) auf eine Weise eingestellt sind, dass, wenn eine spezifische Bedingung nicht erfüllt ist, die Konfigurationskanalkommunikationsschaltung (50, 50b, 703, 703b) betriebsfähig ist, und wenn die spezifische Bedingung erfüllt ist, die Konfigurationskanalkommunikationsschaltung (50, 50b, 703, 703b) deaktiviert ist, wobei es sich bei der spezifischen Bedingung um eine normale Verbindung mit dem ersten Leistungsstift (Vconn1) des ersten Anschlusses (P1) und dem zweiten Leistungsstift (Vconn2) des zweiten Anschlusses (P2) handelt; oder
der erste eMarker (60, 70) eine Konfigurationskanalkommunikationsschaltung umfasst und der zweite eMarker (60b, 70b) nicht die Konfigurationskanalkommunikationsschaltung umfasst.

## Revendications

1. Dispositif de marqueur électronique pour une utilisation dans un câble USB de type C (10) connecté électriquement entre un premier port (P1) et un second port (P2), dans lequel le câble (10) comporte un fil de communication de canal de configuration (CC) et un fil de puissance de bus (Vbus), et le dispositif de marqueur électronique comprend :
un premier marqueur électronique (60, 70) disposé près du premier port (P1) et comportant un premier module de protection active (40, 71) couplé au fil de communication de canal de configuration (CC) ; et
un second marqueur électronique (60b, 70b) disposé près du second port (P2) et comportant un second module de protection active (40b, 71b) couplé au fil de communication de canal de configuration (CC),
le dispositif de marqueur électronique étant **caractérisé en ce que** :
seul l'un du premier marqueur électronique (60, 70) et du second marqueur électronique (60b, 70b) est connecté électriquement à une première fiche de puissance (Vconn1) du premier port (P1) et à une deuxième fiche de puissance (Vconn2) du second port (P2), et ce seul marqueur électronique est le premier marqueur électronique (60, 70),
le premier module de protection active (40, 71) qui est couplé au fil de puissance de bus (Vbus) ayant des connexions à une troisième fiche de puissance (p1a) du premier port (P1) et à une quatrième fiche de puissance (p2a) du second port (P2), est configuré pour déterminer si un premier événement spécifié survient selon une caractéristique d'alimentation du fil de puissance de bus (Vbus), et pour élever une tension du fil de communication de canal de configuration (CC) jusqu'à un niveau supérieur à une tension de circuit ouvert prédéterminée pour que l'un du premier port (P1) et du second port (P2) détermine que le câble (10) connecté entre le premier port (P1) et le second port (P2) est détaché de l'autre du premier port (P1) et du second port (P2) lorsque le premier événement spécifié survient dans le câble (10),
le second module de protection active (40b, 71b) est configuré pour élever la tension du fil de communication de canal de configuration (CC) jusqu'à un niveau supérieur à la tension de circuit ouvert prédéterminée pour que l'un du premier port (P1) et du second port (P2) détermine que le câble (10) connecté entre le premier port (P1) et le second port (P2) est détaché de l'autre du premier port (P1) et du second port (P2) lorsqu'un second événement spécifié survient dans le câble (10) près du second port (P2).

2. Dispositif de marqueur électronique selon la revendication 1, dans lequel le premier événement spécifié ou le second événement spécifié comprend un événement de température anormale.

3. Dispositif de marqueur électronique selon la revendication 1, dans lequel le premier module de protection active (40, 71) comporte un premier circuit de déclenchement actif (20, 702) et un premier circuit de protection (30, 701), dans lequel le premier circuit de déclenchement actif (20, 702) est configuré pour déterminer si le premier événement spécifié survient selon une température détectée à un endroit où le premier circuit de déclenchement actif (20, 702) est situé et la caractéristique d'alimentation du fil de puissance de bus (Vbus), et est configuré pour déclencher le premier circuit de protection (30, 701) pour élever la tension du fil de communication de canal de configuration (CC) jusqu'à un niveau supérieur à la tension de circuit ouvert prédéterminée, pour qu'ainsi l'un du premier port (P1) et du second port (P2) détermine que le câble (10) connecté entre le premier port (P1) et le second port (P2) est détaché de l'autre du premier port (P1) et du second port (P2) et qu'une alimentation en puissance par le biais du fil de puissance de bus (Vbus) soit suspendue.

4. Dispositif de marqueur électronique selon la revendication 1, dans lequel le second marqueur électronique (60b, 70b) est configuré pour drainer de la puissance depuis le premier marqueur électronique (60, 70) par le biais d'une ligne de puissance interne (VCCAH), ou le second marqueur électronique (60b, 70b) est configuré pour drainer de la puissance par le biais du fil de puissance de bus (Vbus) du câble (10).

5. Dispositif de marqueur électronique selon la revendication 4, dans lequel le second module de protection active (40b, 71b) comporte un second circuit de déclenchement actif (20b, 702b) et un second circuit de protection (30b, 701b), dans lequel le second circuit de déclenchement actif (20b, 702b) est configuré pour déterminer si le second événement spécifié survient selon une température détectée à un endroit où le second circuit de déclenchement actif (20b, 702b) est situé, et pour déclencher le second circuit de protection (30b, 701b) pour élever la tension du fil de communication de canal de configuration (CC) jusqu'à un niveau supérieur à la tension de circuit ouvert prédéterminée, et qu'ainsi l'un du premier port (P1) et du second port (P2) détermine que le câble (10) connecté entre le premier port (P1) et le second port (P2) est détaché de l'autre du premier port (P1) et du second port (P2).

6. Dispositif de marqueur électronique selon la revendication 4, dans lequel le second module de protection active (40b, 71b) comporte un second circuit de déclenchement actif (20b, 702b) et un second circuit de protection (30b, 701b), dans lequel le second circuit de déclenchement actif (20b, 702b) est configuré pour déterminer si le second événement spécifié survient selon une température détectée à un endroit où le second circuit de déclenchement actif (20b, 702b) est situé et une caractéristique d'alimentation du fil de puissance de bus (Vbus), et pour déclencher le second circuit de protection (30b, 701b) pour élever la tension du fil de communication de canal de configuration (CC) jusqu'à un niveau supérieur à la tension de circuit ouvert prédéterminée, et qu'ainsi l'un du premier port (P1) et du second port (P2) détermine que le câble (10) connecté entre le premier port (P1) et le second port (P2) est détaché de l'autre du premier port (P1) et du second port (P2).

7. Dispositif de marqueur électronique selon la revendication 4, dans lequel le premier module de protection active (40, 71) comporte un premier circuit de communication de canal de configuration (50, 703), et le second module de protection active (40b, 71b) comporte un second circuit de communication de canal de configuration (50b, 703b), et le premier circuit de communication de canal de configuration (50, 703) est configuré pour pouvoir fonctionner tandis que le second circuit de communication de canal de configuration (50b, 703b) est configuré pour être désactivé lorsqu'une condition spécifique est satisfaite, dans lequel la condition spécifique est l'acquisition réussie de puissance du premier marqueur électronique (60, 70) au second marqueur électronique (60b, 70b) par le biais de la ligne de puissance interne (VCCAH).

8. Dispositif de marqueur électronique selon la revendication 4, dans lequel le premier module de protection active (40, 71) comporte un premier circuit de communication de canal de configuration (50, 703), et le second module de protection active (40b, 71b) comporte un second circuit de communication de canal de configuration (50b, 703b), et le second circuit de communication de canal de configuration (50b, 703b) est configuré pour pouvoir fonctionner tandis que le premier circuit de communication de canal de configuration (50, 703) est configuré pour être désactivé lorsqu'une condition spécifique est satisfaite, dans lequel la condition spécifique est l'acquisition réussie de puissance du premier marqueur électronique (60, 70) au second marqueur électronique (60b, 70b) par le biais de la ligne de puissance interne (VCCAH).

9. Dispositif de marqueur électronique selon la revendication 1, dans lequel le premier module de protection active (40, 71) comporte un premier circuit de communication de canal de configuration (50, 703), et le second module de protection active (40b, 71b) comporte un second circuit de communication de canal de configuration (50b, 703b), et le premier circuit de communication de canal de configuration (50, 703) et le second circuit de communication de canal de configuration (50b, 703b) sont configurés de manière telle que lorsqu'une condition spécifique est satisfaite, le circuit de communication de canal de configuration (50, 50b, 703, 703b) peut fonctionner, et lorsque la condition spécifique est insatisfaite, le circuit de communication de canal de configuration (50, 50b, 703, 703b) est désactivé, dans lequel la condition spécifique est une connexion normale à la première fiche de puissance (Vconn1) du premier port (P1) et à la deuxième fiche de puissance (Vconn2) du second port (P2).

10. Dispositif de marqueur électronique selon la revendication 1, dans lequel le premier module de protection active (40, 71) comporte un premier circuit de communication de canal de configuration (50, 703), et le second module de protection active (40b, 71b) comporte un second circuit de communication de canal de configuration (50b, 703b), et le premier circuit de communication de canal de configuration (50, 703) et le second circuit de communication de canal de configuration (50b, 703b) sont configurés de manière telle que lorsqu'une condition spécifique est insatisfaite, le circuit de communication de canal de configuration (50, 50b, 703, 703b) peut fonctionner, et lorsque la condition spécifique est satisfaite, le circuit de communication de canal de configuration (50, 50b, 703, 703b) est désactivé, dans lequel la condition spécifique est une connexion normale à la première fiche de puissance (Vconn1) du premier port (P1) et à la deuxième fiche de puissance (Vconn2) du second port (P2).

11. Dispositif de marqueur électronique selon la revendication 1, dans lequel le premier module de protection active (40, 71) comporte un circuit de communication de canal de configuration (50, 703), et le second module de protection active (40b, 71b) ne comporte pas le circuit de communication de canal de configuration.

12. Câble USB de type C à connecter électriquement entre un premier port (P1) et un second port (P2), **caractérisé en ce qu'**il comprend :
un fil de communication de canal de configuration (CC), un fil de puissance de bus (Vbus) ; et un dispositif de marqueur électronique tel que défini dans l'une quelconque des revendications 1 à 11.

13. Procédé de gestion de puissance d'un câble USB de type C (10) connecté électriquement entre un premier port (P1) et un second port (P2), le câble (10) comprenant un fil de communication de canal de configuration (CC) et un fil de puissance de bus (Vbus), le procédé étant **caractérisé en ce qu'**il comprend :
le changement d'une caractéristique électrique du fil de communication de canal de configuration (CC) avec un premier marqueur électronique (60, 70) par élévation d'une tension du fil de communication de canal de configuration (CC) jusqu'à un niveau supérieur à une tension de circuit ouvert prédéterminée, pour que l'un du premier port (P1) et du second port (P2) détermine que le câble (10) connecté entre le premier port (P1) et le second port (P2) est détaché de l'autre du premier port (P1) et du second port (P2) lorsqu'un premier événement spécifié survient dans le câble (10) selon une caractéristique d'alimentation du fil de puissance de bus (Vbus) ; et
le changement d'une caractéristique électrique du fil de communication de canal de configuration (CC) avec un second marqueur électronique (60b, 70b) par élévation de la tension du fil de communication de canal de configuration (CC) jusqu'à un niveau supérieur à la tension de circuit ouvert prédéterminée, pour que l'un du premier port (P1) et du second port (P2) détermine que le câble (10) connecté entre le premier port (P1) et le second port (P2) est détaché de l'autre du premier port (P1) et du second port (P2) lorsqu'un second événement spécifié survient dans le câble (10) près du second port (P2),
dans lequel seul l'un du premier marqueur électronique (60, 70) et du second marqueur électronique (60b, 70b) est connecté électriquement à une première fiche de puissance (Vconn1) du premier port (P1) et à une deuxième fiche de puissance (Vconn2) du second port (P2), et dans lequel le fil de puissance de bus (Vbus) a des connexions à une troisième fiche de puissance (p1a) du premier port (P1) et à une quatrième fiche de puissance (p2a) du second port (P2).

14. Procédé selon la revendication 13, dans lequel le premier événement spécifié ou le second événement spécifié est un événement de température anormale.

15. Procédé selon la revendication 13, dans lequel le premier marqueur électronique (60, 70) comporte un premier circuit de déclenchement actif (20, 702) et un premier circuit de protection (30, 701), dans lequel le premier circuit de déclenchement actif (20, 702) détermine si le premier événement spécifié survient selon une température détectée à un endroit où le premier circuit de déclenchement actif (20, 702) est situé et la caractéristique d'alimentation du fil de puissance de bus (Vbus), et déclenche le premier circuit de protection (30, 701) pour élever la tension du fil de communication de canal de configuration (CC) jusqu'à un niveau supérieur à la tension de circuit ouvert prédéterminée, pour qu'ainsi l'un du premier port (P1) et du second port (P2) détermine que le câble (10) connecté entre le premier port (P1) et le second port (P2) est détaché de l'autre du premier port (P1) et du second port (P2) et qu'une alimentation en puissance par le biais du fil de puissance de bus (Vbus) soit suspendue.

16. Procédé selon la revendication 13, dans lequel le second marqueur électronique (60b, 70b) draine de la puissance depuis le premier marqueur électronique (60, 70) par le biais d'une ligne de puissance interne (VCCAH), ou le second marqueur électronique (60b, 70b) draine de la puissance par le biais du fil de puissance de bus (Vbus) du câble (10).

17. Procédé selon la revendication 16, dans lequel :
le premier marqueur électronique (60, 70) ou le second marqueur électronique (60b, 70b) change la caractéristique électrique du fil de communication de canal de configuration (CC) par élévation de la tension du fil de communication de canal de configuration (CC) jusqu'à un niveau supérieur à la tension de circuit ouvert prédéterminée, pour qu'ainsi l'un du premier port (P1) et du second port (P2) détermine que le câble (10) connecté entre le premier port (P1) et le second port (P2) est détaché de l'autre du premier port (P1) et du second port (P2) et qu'une alimentation en puissance par le biais du fil de puissance de bus (Vbus) du câble (10) soit suspendue ; ou
le second marqueur électronique (60b, 70b) comporte un second circuit de déclenchement actif (20b, 702b) et un second circuit de protection (30b, 701b), dans lequel le second circuit de déclenchement actif (20b, 702b) détermine si le second événement spécifié survient selon une température détectée à un endroit où le second circuit de déclenchement actif (20b, 702b) est situé, et déclenche le second circuit de protection (30b, 701b) pour élever la tension du fil de communication de canal de configuration (CC) jusqu'à un niveau supérieur à la tension de circuit ouvert prédéterminée, et qu'ainsi l'un du premier port (P1) et du second port (P2) détermine que le câble (10) connecté entre le premier port (P1) et le second port (P2) est détaché de l'autre du premier port (P1) et du second port (P2) ; ou
le second marqueur électronique (60b, 70b) comporte un second circuit de déclenchement actif (20b, 702b) et un second circuit de protection (30b, 701b), dans lequel le second circuit de déclenchement actif (20b, 702b) détermine si le second événement spécifié survient selon une température détectée à un endroit où le second circuit de déclenchement actif (20b, 702b) est situé et la caractéristique d'alimentation du fil de puissance de bus (Vbus), et déclenche le second circuit de protection (30b, 701b) pour élever la tension du fil de communication de canal de configuration (CC) jusqu'à un niveau supérieur à la tension de circuit ouvert prédéterminée, et qu'ainsi l'un du premier port (P1) et du second port (P2) détermine que le câble (10) connecté entre le premier port (P1) et le second port (P2) est détaché de l'autre du premier port (P1) et du second port (P2) ; ou
le premier marqueur électronique (60, 70) comporte un premier circuit de communication de canal de configuration (50, 703), et le second marqueur électronique (60b, 70b) comporte un second circuit de communication de canal de configuration (50b, 703b), et le premier circuit de communication de canal de configuration (50, 703) est réglé pour pouvoir fonctionner tandis que le second circuit de communication de canal de configuration (50b, 703b) est réglé pour être désactivé lorsqu'une condition spécifique est satisfaite, dans lequel la condition spécifique est l'acquisition réussie de puissance du premier marqueur électronique (60, 70) au second marqueur électronique (60b, 70b) par le biais de la ligne de puissance interne (VCCAH) ; ou
le premier marqueur électronique (60, 70) comporte un premier circuit de communication de canal de configuration (50, 703), et le second marqueur électronique (60b, 70b) comporte un second circuit de communication de canal de configuration (50b, 703b), et le second circuit de communication de canal de configuration (50b, 703b) est réglé pour pouvoir fonctionner tandis que le premier circuit de communication de canal de configuration (50, 703) est réglé pour être désactivé lorsqu'une condition spécifique est satisfaite, dans lequel la condition spécifique est l'acquisition réussie de puissance du premier marqueur électronique (60, 70) au second marqueur électronique (60b, 70b) par le biais de la ligne de puissance interne (VCCAH).

18. Procédé selon la revendication 13, dans lequel :
le premier marqueur électronique (60, 70) comporte un premier circuit de communication de canal de configuration (50, 703), et le second marqueur électronique (60b, 70b) comporte un second circuit de communication de canal de configuration (50b, 703b), et le premier circuit de communication de canal de configuration (50, 703) et le second circuit de communication de canal de configuration (50b, 703b) sont réglés de manière telle que lorsqu'une condition spécifique est satisfaite, le circuit de communication de canal de configuration (50, 50b, 703, 703b) peut fonctionner, et lorsque la condition spécifique est insatisfaite, le circuit de communication de canal de configuration (50, 50b, 703, 703b) est désactivé, dans lequel la condition spécifique est une connexion normale à la première fiche de puissance (Vconn1) du premier port (P1) et à la deuxième fiche de puissance (Vconn2) du second port (P2) ; ou
le premier marqueur électronique (60, 70) comporte un premier circuit de communication de canal de configuration (50, 703), et le second marqueur électronique (60b, 70b) comporte un second circuit de communication de canal de configuration (50b, 703b), et le premier circuit de communication de canal de configuration (50, 703) et le second circuit de communication de canal de configuration (50b, 703b) sont réglés de manière telle que lorsqu'une condition spécifique est insatisfaite, le circuit de communication de canal de configuration (50, 50b, 703, 703b) peut fonctionner, et lorsque la condition spécifique est satisfaite, le circuit de communication de canal de configuration (50, 50b, 703, 703b) est désactivé, dans lequel la condition spécifique est une connexion normale à la première fiche de puissance (Vconn1) du premier port (P1) et à la deuxième fiche de puissance (Vconn2) du second port (P2) ; ou
le premier marqueur électronique (60, 70) comporte un circuit de communication de canal de configuration, et le second marqueur électronique (60b, 70b) ne comporte pas le circuit de communication de canal de configuration.
